# EUROPEAN PATENT APPLICATION

(11) **EP 4 621 223 A1**
(43) Date of publication of application: **24.09.2025**
(21) Application number: 23891613.4
(22) Date of filing: 15.11.2023
(51) Int. Cl.: F03D 80/50, B25J 5/00, F03D 17/00

(54) **DEVICE FOR MOVING ON WINDMILL BLADE, AND CONTROL METHOD AND CONTROL PROGRAM FOR SAID DEVICE**

(30) Priority: 17.11.2022 JP 2022184248
(71) Applicant: Lebo Robotics, Inc., Suginami-ku Tokyo 1670054 (JP)
(72) Inventor: HAMAMURA, Keitaro, Tokyo 167-0054 (JP); SUGIYAMA, Yuichi, Tokyo 167-0054 (JP); MURAKAMI, Masayuki, Tokyo 167-0054 (JP); YASHIMA, Takaaki, Tokyo 167-0054 (JP); TAKESUE, Koji, Tokyo 167-0054 (JP); SEKI, Hiroki, Tokyo 167-0054 (JP); KAWABATA, Hiroto, Tokyo 167-0054 (JP)
(74) Representative: Burger, Hannes Alfred
(86) International application number: PCT/JP2023/041092
(87) International publication number: WO 2024/106466

(57) **Abstract**

A control method for a device for moving on a windmill blade according to the present invention involves measuring the cross-sectional shape of the windmill blade, and controlling the device such that the device behaves according to the cross-sectional shape. The control of the device may include controlling the device such that the device repairs a damaged portion of the windmill blade in accordance with the cross-sectional shape; and the control of the device may include controlling the device such that the device controls the attitude of the device in accordance with the cross-sectional shape.

## Description

### [Technical Field]

The present invention relates to a device and a system that move on a blade of a wind turbine, and a control method and a control program for the device.

### [Background Art]

A large wind power generator has a nacelle with a height of about 100 m. The peripheral speed of a blade edge of the large wind power generator is about 100 to 120 m/s, and a leading edge (front edge), which is an edge that cuts the wind, of the blade is worn by about 20 µm every year. In addition, blades of a large wind power generator are likely to be damaged by lightning. Therefore, the blade is provided with a lightning receiving part (receptor) such that a lightning stroke current flows to the ground, as a countermeasure against lightning. However, when the lightning receiving part has poor conduction due to a failure, the blade cannot cause a lightning stroke current due to a lightning strike to flow to the ground and is destroyed. Therefore, the blades of the large wind power generator require periodic maintenance.

A device for performing maintenance of blades of a wind turbine is known (Patent Literature 1).

### [PRIOR ART DOCUMENT]

### [PATENT LITERATURE]

[Patent Literature 1] WO 2018/155704

### [Summary of Invention]

### [Solution to Problem]

The inventors of the present invention have found that a device that moves on a blade of a wind turbine can be controlled by using a cross-sectional shape of the blade of the wind turbine, and as a result of intensive research, have developed a control method of the device that moves on the blade of the wind turbine.

The present invention provides, for example, the following items.

### (Item 1)

A method for controlling a device that moves on a blade of a wind turbine, the method including:
measuring a cross-sectional shape of the blade of the wind turbine; and
controlling the device so that the device performs behavior according to the cross-sectional shape.

### (Item 2)

The method according to the item, in which
the controlling the device includes:
controlling the device so that the device repairs a damaged portion of the blade of the wind turbine according to the cross-sectional shape.

### (Item 3)

The method according to any one of the items, in which
Performing the repair of the damaged portion of the blade of the wind turbine according to the cross-sectional shape includes:
estimating a surface shape after the repair of the blade of the wind turbine based on the cross-sectional shape; and
performing repair of the damaged portion so as to achieve the estimated surface shape.

### (Item 4)

The method according to any one of the items, in which
the controlling the device further includes:
determining whether or not to repair the blade of the wind turbine based on the cross-sectional shape, and
the controlling the device so as to repair the damaged portion is performed when it is determined that the blade of the wind turbine should be repaired.

### (Item 5)

The method according to any one of the items, in which
the controlling the device further includes:
specifying the damaged portion based on the cross-sectional shape.

### (Item 6)

The method according to any one of the items, further including:
measuring the cross-sectional shape of the blade of the wind turbine while repairing the damaged portion; and
storing a result of measuring the cross-sectional shape of the blade of the wind turbine.

### (Item 7)

The method according to any one of the items, further including adjusting repair of the damaged portion based on the stored result.

### (Item 8)

The method according to any one of the items, in which
the controlling the device further includes:
controlling the device so that the device controls an attitude of the device according to the cross-sectional shape.

### (Item 9)

The method according to any one of the items, in which
the controlling the attitude of the device according to the cross-sectional shape includes:
determining a peak in each cross-sectional shape based on a cross-sectional shape at a first position and a cross-sectional shape at a second position in a direction along the blade of the wind turbine; and
controlling the attitude of the device so that a line connecting a peak of the cross-sectional shape at the first position and a peak of the cross-sectional shape at the second position is parallel to a center line of the device.

### (Item 10)

The method according to any one of the items, in which the controlling the attitude of the device according to the cross-sectional shape includes controlling the attitude of the device when the device lands on the blade of the wind turbine.

### (Item 11)

The method according to any one of the items, in which
the estimating the surface shape after the repair of the blade of the wind turbine based on the cross-sectional shape includes:
estimating, using polynomial approximation, a curve that smoothly connects with a cross-sectional shape of an undamaged portion in a cross section having the damaged portion.

### (Item 12)

The method according to any one of the items, in which
the estimating, using polynomial approximation, a curve that smoothly connects with a cross-sectional shape of an undamaged portion in a cross-sectional shape having the damaged portion includes at least one of:
adjusting an order of the polynomial approximation;
dividing the cross-sectional shape having the damaged portion into a plurality of regions and estimating a curve for each of the plurality of regions;
estimating a first curve, and estimating a second curve by ignoring a cross-sectional shape inside the first curve; or
estimating a curve based on a cross-sectional shape of a cross section having no damaged portion.

### (Item 13)

The method according to any one of the items, in which
the estimating, using polynomial approximation, a curve that smoothly connects with a cross-sectional shape of an undamaged portion in a cross-sectional shape having the damaged portion further includes at least one of:
modifying a curve based on a user input; or
estimating a curve based on design data of the blade of the wind turbine.

### (Item 14)

The method according to any one of the items, in which
the estimating the surface shape of the blade after the repair of the wind turbine based on the cross-sectional shape includes:
determining whether or not the estimated curve satisfies a predetermined condition.

### (Item 15)

The method according to any one of the items, in which
the predetermined condition includes that
a matching rate between the estimated curve and a curve representing a cross-sectional shape of an undamaged portion in the cross-sectional shape having the damaged portion exceeds a predetermined threshold, and
a rate at which the estimated curve is located inside the measured cross-sectional shape does not exceed a predetermined threshold.

### (Item 16)

The method according to any one of the items, in which the cross-sectional shape includes a cross-sectional shape perpendicular to a direction in which a leading edge of the blade of the wind turbine extends and a cross-sectional shape parallel to a direction in which the leading edge of the blade of the wind turbine extends.

### (Item 17)

A device including:
a movement means for moving along a blade of a wind turbine;
a measurement means that measures a cross-sectional shape of the blade of the wind turbine; and
a control means that controls the device so that the device performs behavior according to the cross-sectional shape.

### (Item 18)

A control program for a device that moves on a blade of a wind turbine, the program being executed by a processor comprised in the device, the program causing the processor to perform a processing including:
receiving data representing a cross-sectional shape of the blade of the wind turbine; and
controlling the device so that the device performs behavior according to the cross-sectional shape.

### (Item 18A)

A non-transitory computer readable storage medium storing a program according to item 18.

### (Item 19)

A method for controlling a device that moves on a blade of a wind turbine, the method including:
measuring a cross-sectional shape of the blade of the wind turbine;
controlling the device so that the device controls an attitude of the device according to the cross-sectional shape; and
controlling the device so that the device repairs a damaged portion of the blade of the wind turbine according to the cross-sectional shape.

### (Item 20)

A method including:
receiving data representing a cross-sectional shape of a blade of a wind turbine;
determining whether or not to repair the blade of the wind turbine based on the cross-sectional shape.

### [Advantageous Effects of Invention]

According to the present invention, it is possible to provide a method for controlling a device that moves on a blade of a wind turbine using a cross-sectional shape of the blade of the wind turbine.

### [Brief Description of Drawings]

[Fig. 1A] A view describing a procedure for performing maintenance of a blade of a wind turbine.
[Fig. 1B] A view describing the procedure for performing maintenance of the blade of the wind turbine.
[Fig. 1C] A view describing the procedure for performing maintenance of the blade of the wind turbine.
[Fig. 1D] A view describing the procedure for performing maintenance of the blade of the wind turbine.
[Fig. 2] A diagram illustrating a conceptual diagram of a configuration of a device 100 of the present invention.
[Fig. 3] A diagram illustrating an example of the configuration of the device 100.
[Fig. 4] A diagram schematically illustrating a state in which the device 100 moves on a blade 11.
[Fig. 5A] A diagram schematically illustrating control of an attitude of the device 100 by an attitude control means.
[Fig. 5B] A diagram schematically illustrating control of the attitude of the device 100 by the attitude control means.
[Fig. 5C] A diagram schematically illustrating control of the attitude of the device 100 by the attitude control means.
[Fig. 5D] A side view and a rear view illustrating an example of data representing cross-sectional shapes measured by measurement means 160A and 160B and the attitude of the device 100 at that time.
[Fig. 6] A flowchart illustrating an example of a control method 600 of the device 100 that moves on the blade of the wind turbine.
[Fig. 7] A flowchart illustrating an example of a flow of processing (processing 700) of estimating a surface shape after repair.
[Fig. 8A] A diagram describing a concept of adjusting an order of polynomial approximation.
[Fig. 8B] A diagram describing a concept of dividing a cross-sectional shape having a damaged portion into a plurality of regions and estimating a curve for each of the plurality of regions.
[Fig. 8C] A diagram describing a concept of estimating a first curve, and estimating a second curve by ignoring a cross-sectional shape inside the first curve.
[Fig. 8D] A diagram describing a concept of estimating a curve based on a cross-sectional shape of a cross section having no damaged portion.
[Fig. 8E] A diagram describing a concept of correcting a curve based on a user input.
[Fig. 8F] A diagram describing a concept of estimating a curve based on design data of the blade of the wind turbine.
[Fig. 8G] A diagram describing a concept of measuring cross-sectional shapes of cross sections at a plurality of positions along a leading edge L.E.
[Fig. 9A] A diagram schematically illustrating control of the attitude of the device 100 by the attitude control means when the device 100 lands on the blade.
[Fig. 9B] A diagram schematically illustrating control of the attitude of the device 100 by the attitude control means when the device 100 lands on the blade.
[Fig. 9C] A diagram schematically illustrating control of the attitude of the device 100 by the attitude control means when the device 100 lands on the blade.

### [Description of Embodiments]

Hereinafter, an embodiment of the present invention will be described with reference to the drawings.

### 1. Maintenance of blade of wind turbine

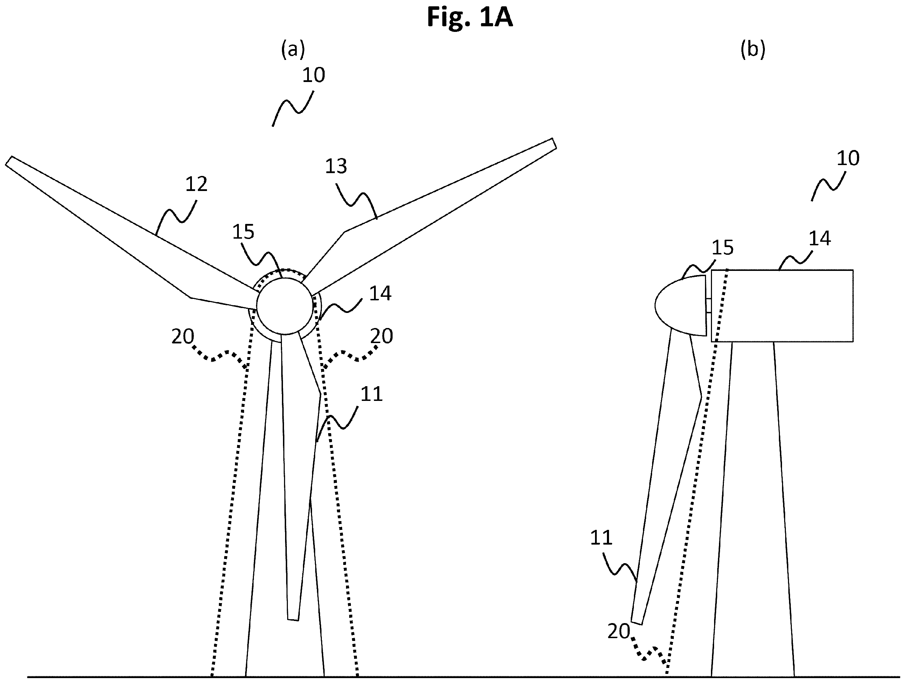

With reference to Figs. 1A to 1D, a procedure for performing maintenance of a blade of a wind turbine using a device of the present invention will be described. (a) of Figs. 1A to 1D illustrates a front side of the wind turbine 10, and (b) of Figs. 1A to 1D illustrates a right side of the wind turbine 10. (b) of Figs. 1A to 1D illustrates only the blade 11 to be maintained, and the other two blades 12 and 13 are omitted. The wind turbine illustrated in (a) of Figs. 1A to 1D is a wind turbine that rotates clockwise in the drawing, and a linear edge of each blade is a leading edge (front edge).

In the present specification, a "wind turbine" refers to an apparatus that receives wind and obtains power. An example of the wind turbine is a wind power generator.

In the present specification, "maintenance" refers to inspection or maintenance of an object. Maintenance includes repair. Examples of the maintenance include imaging a surface of an object; inspecting conduction of a lightning receiving part of the object; cleaning the surface of the object; grinding and/or polishing the surface of the object; applying a paint to the surface of the object; and applying a material such as putty, adhesive, or sealant to the surface of the object. The repair may include cleaning the damaged portion to remove foreign material; applying a material such as putty, adhesive, or sealant, to the damaged portion after cleaning; polishing the applied material to smoothly connect with an undamaged portion; and applying a paint to the surface after polishing or sticking a protective material to the surface after polishing. Note that, in the present specification, the "damaged portion" can be used synonymously with a "repair-required portion". For example, a portion that is not damaged but needs to be repaired may be referred to as a "repair-required portion" or a "damaged portion".

Fig. 1A illustrates a state of a preparation stage before the device 100 of the present invention is attached to the blade 11 of the wind turbine 10.

The maintenance of the blade 11 is performed in a state where the blade 11 is positioned so that the blade 11 extends vertically downward. This is the same as the state of a blade in a conventional method in which a worker moves on the blade along a rope stretched on the blade to perform maintenance, and is thus easily accepted at existing work sites. When the blade 11 is positioned so as to extend vertically downward, the leading edge is inclined by about five degrees with respect to the vertical, as illustrated in (b) of Fig. 1A.

In a preparatory stage before attaching the device 100 to the blade 11 of the wind turbine 10, a rope 20 is installed on the wind turbine 10. Here, a mode of installing the rope 20 on the wind turbine 10 is not limited. The rope 20 can be installed at any position on the wind turbine 10 in any manner.

In one example, the rope 20 is secured to a nacelle 14 of the wind turbine 10. The nacelle 14 is a housing that houses a generator, a gear box, and the like. The rope 20 may be secured to a hatch of the nacelle 14, for example. The rope 20 may be secured to the nacelle 14 using, for example, a dedicated fastener. At this time, the rope 20 can be transported to the nacelle 14 of the wind turbine 10 by a flying device such as a drone.

In another example, the rope 20 may be fixed to a constriction present near a root of the blade 11, the rope 20 may be hooked on the blades 12 and 13, or the rope 20 may be fixed to a tower of the wind turbine 10.

When the rope 20 is hooked on the blades 12 and 13, the rope 20 may, for example, wrap around the blades 12 and 13 with one end extending and fixed to the ground, and the other end extending towards the blade 11. The rope 20 may then be transported over the blades 12 and 13 by the flying device such as a drone and hooked on the blades 12 and 13.

Alternatively, for example, two ropes 20 may be used and a ring is formed at one end of each rope, the blade 12 may be passed through the ring of one rope 20, and the blade 13 may be passed through the ring of the other rope 20, thereby hooking the two ropes 20 on the blades 12 and 13, respectively. At this time, the two ropes 20 can be transported to distal ends of the blades 12 and 13 by the flying device such as a drone and hooked on the blades 12 and 13.

Hereinafter, an example in which the two ropes 20 are fixed to the nacelle 14 of the wind turbine 10 will be described. Each of the two ropes 20 extends from the nacelle 14 of the wind turbine 10 through the vicinity of a hub 15 to the ground. The hub 15 is a member that rotatably couples the blades 11, 12, 13 and the nacelle 14.

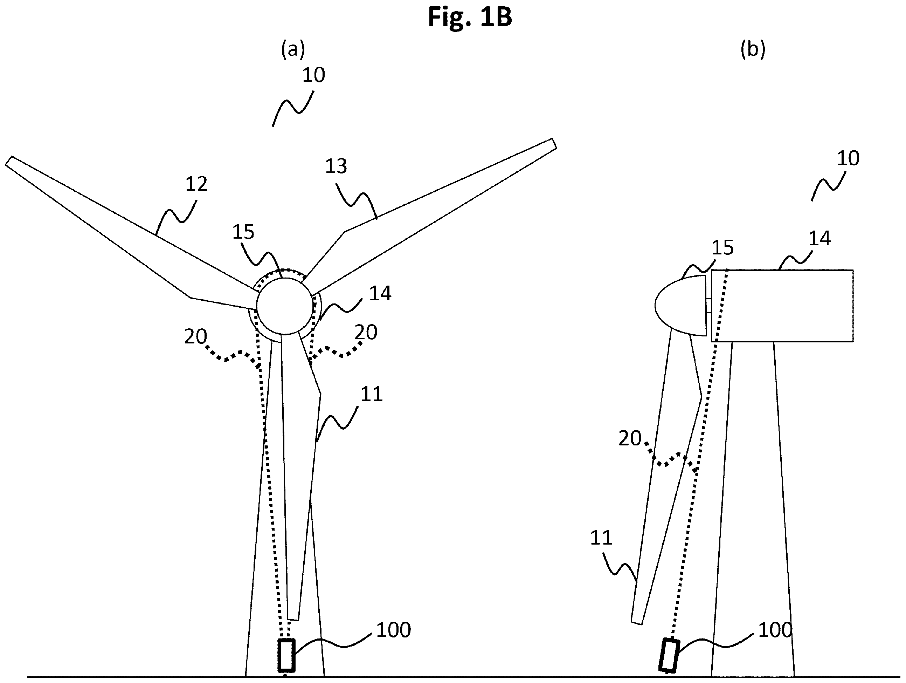

Figs. 1B to 1C illustrate a state of a stage where the device 100 is disposed on the blade 11 of the wind turbine 10.

In the device 100, two ropes 20 extend from the nacelle 14 of the wind turbine 10. The two ropes 20 are connected to the device 100.

The device 100 includes movement means for moving along the two ropes 20. The movement means is, for example, a winch. The device 100 includes, for example, two winches, in which one rope is connected to one of the two winches and another rope is connected to the other of the two winches. One end of the rope 20 is fixed to the ground by, for example, a weight or the like. The device 100 can ascend along the rope 20 by winding the rope 20 using a winch.

When the device 100 ascends along the rope 20 and reaches substantially the same height as the distal end of the blade 11, the spatial position of the device 100 is controlled such that it rests on the distal end of the blade 11.

The spatial position of the device 100 can be controlled by any method. For example, the spatial position may be controlled by pulling one of the two ropes 20, the spatial position may be controlled by pulling both of the two ropes 20, or the spatial position may be controlled by connecting at least one rope separate from the two ropes 20 to the device 100 and pulling the at least one rope. These ropes may, for example, be pulled by a worker or robot on the ground, may be pulled by a worker or robot on water or under water, or may be pulled by a worker or robot in the air. Pulling the rope by a worker or robot on water or underwater, or by a worker or robot in the air, is preferred, for example, in the case of performing maintenance on offshore or coastal wind turbines.

Preferably, the spatial position of the device 100 is controlled by pulling one or both of the two ropes 20 from the ground. This is because the spatial position of the device 100 can be safely controlled from the ground without requiring additional equipment.

The control of the spatial position is not limited to the control via the rope. For example, instead of or in addition to the control via the rope, the spatial position may be controlled by control via a position control device that the device 100 may have. The position control device may be a device capable of generating a propulsive force to control the position of the device 100. For example, the position control device may be a propeller attached to the device 100 or a flying device, such as a drone attached to the device 100. Alternatively, the position control device can for example be a rotatable counterweight. The rotatable counterweight is useful in controlling roll or pitch or yaw rotation of the device 100.

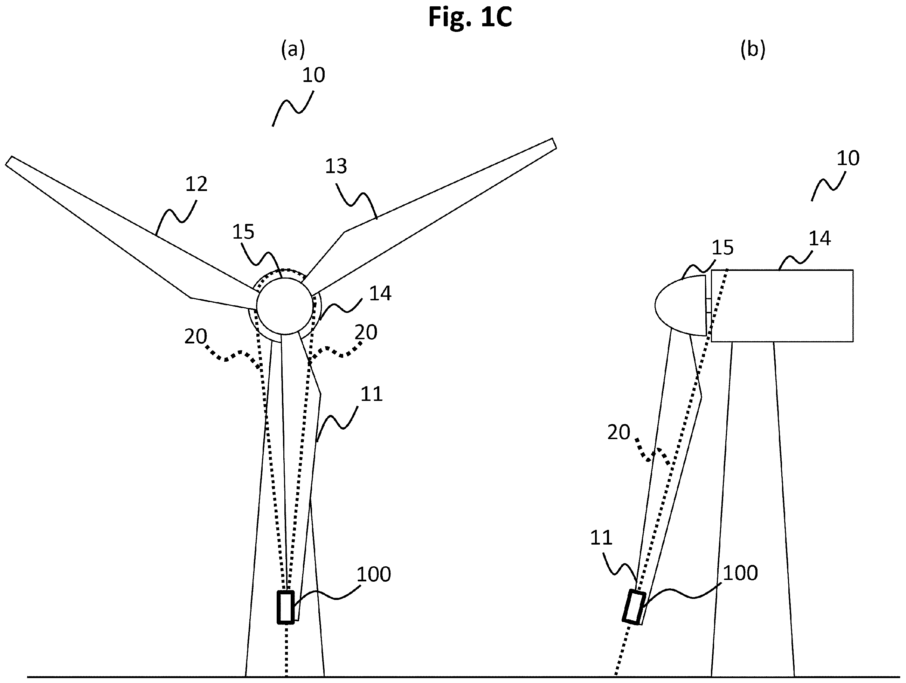

As illustrated in Fig. 1C, once the device 100 reaches on the blade 11, the device 100 that has reached on the blade 11 can be attached to the blade 11 by any mechanism. For example, the device 100 may be attached to the blade 11 by mechanical force, may be attached to the blade 11 by magnetic force, may be attached to the blade 11 by an electric force, or may be attached to the blade 11 by pressure. The mechanism for attaching to the blade 11 by mechanical force may be, for example, a pair of frames biased to clamp the blade 11. The mechanism for attaching to the blade 11 by pressure may be, for example, a mechanism for generating negative pressure and sucking on the blade 11.

The device 100 also includes movement means for moving on the blade 11. The movement means is, for example, a wheel. The device 100 may be moved on the blade, for example by winding or unwinding the rope 20 with the winch with the wheel contacting the blade 11.

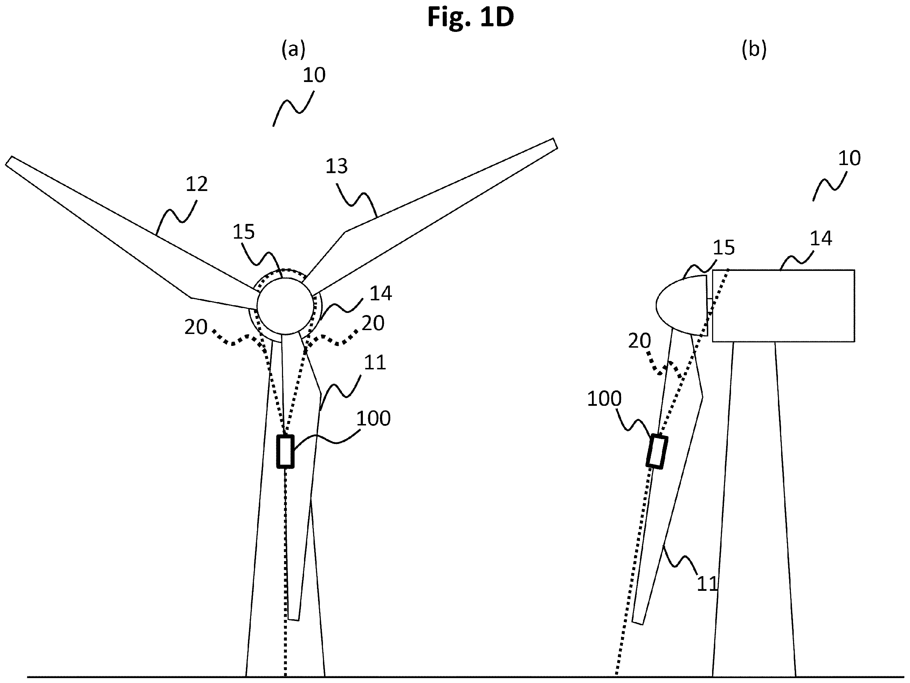

Fig. 1D illustrates the device 100 moving along the rope 20 over the leading edge of the blade 11.

When the device 100 moves along the leading edge, the device 100 may remain attached to the blade 11. This allows the device 100 to move on the leading edge of the blade 11 without lifting. Also, as discussed above, because the leading edge of the blade 11 is angled about 5 degrees relative to the vertical (in some cases, angled about 1 degree to about 10 degrees), the force of gravity acting on the device 100 acts to urge the device 100 against the leading edge of the blade 11, preventing uplift of the device 100.

The device 100 performs maintenance on the blade 11 while moving on the leading edge of the blade 11. For example, the device 100 measures the cross-sectional shape of the blade 11 with a scanner while moving on the leading edge of the blade 11. For example, the device 100 images the surface of the leading edge with a camera while moving on the leading edge of the blade 11. For example, the device 100 inspects electrical continuity of a lightning receiving part using a probe while moving on the leading edge of the blade 11. For example, the device 100 cleans the surface of the leading edge using a cleaning device while moving on the leading edge of the blade 11. For example, the device 100 polishes the surface of the leading edge with a sander while moving on the leading edge of the blade 11. For example, the device 100 applies paint to the surface of the leading edge using a paint applicator while moving on the leading edge of the blade 11. For example, the device 100 applies a material, such as putty, adhesive, or sealant, to the surface of the leading edge using an electric gun while moving on the leading edge of the blade 11. A hole made in the blade 11 can be filled with the applied material.

The device 100 can move on the leading edge of the blade 11 in a direction in which the rope 20 extends, for example, a direction from the distal end of the blade toward the root of the blade and a direction from the root of the blade toward the distal end of the blade, by controlling winding and unwinding by the winch. Accordingly, the device 100 can perform maintenance while reciprocating on the leading edge of the blade 11. Even if the device 100 is detached from the blade 11, the rope 20 to which the winch of the device 100 is connected serves as a lifeline, and fall of the device 100 can be prevented.

The device 100 may take various actions using the measured cross-sectional shape of the blade 11.

For example, the device 100 may use the measured cross-sectional shape of the blade 11 to control the attitude of the device 100. As used herein, an "attitude" of a device refers to the position and/or orientation of the device in space, and "controlling the attitude" of the device refers to controlling the position of the device in space, controlling the orientation of the device in space, or controlling the position and orientation of the device in space. For example, the device 100 can control the attitude of the device with accuracy corresponding to the resolution of the measured cross-sectional shape.

The device 100 can, for example, use a cross-sectional shape of the blade 11 at least at one location along a direction from the distal end toward the root of the blade 11 to control the attitude. For example, by using the cross-sectional shape of at least one location of the blade, the device 100 can control the position of the device 100 relative to the blade. For example, a peak of the cross-sectional shape of the blade can be specified and the position of the device 100 can be controlled so that the device 100 is at a predetermined relative position with respect to the peak (for example, a position where the center of the device and the peak are aligned). Alternatively, for example, a repair-required portion in the cross-sectional shape of the blade can be specified, and the position of the device 100 can be controlled so that the device 100 is at a predetermined relative position with respect to the repair-required portion (for example, a position where the center of the device and the center of the repair-required portion are aligned with each other).

For example, by using cross-sectional shapes of the blade at least at two locations along the direction from the distal end toward the root of the blade 11, the device 100 can control the orientation of the device relative to the blade. For example, a peak of the cross-sectional shape of the blade 11 is specified at each of at least two locations, and the attitude of the device 100 is controlled so that a line connecting the peaks and a center line of the device 100 are parallel to each other (representing, for example, the traveling direction of the device 100). Thus, the traveling direction of the device 100 can be aligned with the direction from the distal end toward the root of the blade 11, and it can be ensured that the device 100 travels in the direction from the distal end toward the root of the blade 11. Alternatively, for example, in each of at least two locations, repair-required portions in the cross-sectional shape of the blade 11 are specified, and the attitude of the device 100 is controlled so that a line connecting the centers of the respective repair-required portions is parallel to the center line of the device 100 (representing, for example, the traveling direction of the device 100). Thus, the traveling direction of the device 100 can be aligned with the direction in which the repair-required portion extends, and it is possible to ensure that the device 100 travels in the direction in which the repair-required portion extends.

For example, the device 100 may use a measured cross-sectional shape of the blade 11 to repair a damaged portion of the blade. The device 100 may use a cross-sectional shape of a cross-section having the damaged portion to repair the damaged portion of the blade, for example. Furthermore, in addition to the cross-sectional shape of the cross-section having the damaged portion, the device 100 may also use a cross-sectional shape of a cross-section having no damaged portion. For example, a surface shape of the blade after repair can be estimated based on the cross-sectional shape of the cross-section having the damaged portion, or the cross-sectional shape of the cross-section having the damaged portion and the cross-sectional shape of the cross-section having no damaged portion, and then the damaged portion of the blade can be repaired so as to achieve the estimated surface shape.

Preferably, the device 100 may use the measured cross-sectional shape of the blade 11 to repair the damaged portion of the blade while controlling the attitude of the device 100. For example, when the attitude of the device 100 changes during repair of the blade, the device 100 would work at a position deviated from the surface to be originally worked, which may prevent repair with high accuracy from being performed. By performing repair while controlling the attitude of the device 100 using the measured cross-sectional shape, it is possible to perform repair while controlling the attitude with high accuracy according to the resolution of the measured cross-sectional shape, enabling repair with high accuracy (for example, accuracy of 1 mm or less). This may lead to the perfection of the shape after repair and smoothness of connection between the damaged portion and the undamaged portion.

For example, the device 100 can determine whether or not to repair the blade before repairing the damaged portion of the blade by using the measured cross-sectional shape of the blade 11. For example, a difference between a cross-sectional shape in an undamaged state or an ideal state after repair and the measured cross-sectional shape of the blade 11 is obtained, and when the difference of any portion exceeds a predetermined threshold, it can be determined that the blade should be repaired. This makes it possible to determine the necessity of repair with higher accuracy than, for example, a case where a person visually determines on site or a case where determination is made using a two-dimensional image by an imaging means such as a camera. This is because the measured cross-sectional shape makes it possible to perform determination in consideration of damage in a depth direction that cannot be seen visually or from a two-dimensional image. Such a determination is advantageous in terms of enabling maintenance at an appropriate timing.

For example, the device 100 may use the measured cross-sectional shape of the blade 11 to specify the damaged portion before repairing the damaged portion of the blade. For example, a difference between a cross-sectional shape in an undamaged state or an ideal state after repair and the measured cross-sectional shape of the blade 11 is obtained, and a portion where the difference exceeds a predetermined threshold can be specified as a damaged portion. This makes it possible to specify the damaged portion with higher accuracy than, for example, a case where a person visually specifies the damaged portion on site or a case where the damaged portion is specified using a two-dimensional image by an imaging means such as a camera. This is because damage in the depth direction that cannot be seen visually or from a two-dimensional image can also be identified by the measured cross-sectional shape.

Note that the determining of necessity of repair of the blade and/or the specifying of the damaged portion of the blade may be performed by the device 100 itself or may be performed by an external device communicating with the device 100. For example, when it is performed by an external device, the device 100 will transmit data of the measured cross-sectional shape to the external device and receive data from the external device indicating whether or not to repair and/or data indicating the specified damaged portion.

In the example described above, it has been described that the device 100 controls the attitude of the device 100 while moving on the blade 11, but the cross-sectional shape of the blade 11 can also be applied to control the attitude of the device 100 when the device 100 is attached to the blade 11. For example, as illustrated in Fig. 1C, when the device 100 reaches the blade 11, the device 100 will be attached to the blade 11, but if the device 100 does not land on the blade 11 successfully, it may lead to a damage to the device 100 or the blade 11. Thus, the attitude of the device 100 needs to be precisely controlled when the device 100 lands on the blade 11. Note that, in the present specification, "land(ing)" refers to an action of approaching and contacting an object, and the device 100 landing on the blade 11 refers to an action of the device approaching and contacting the blade 11.

By using the cross-sectional shape of the blade 11, the attitude of the device 100 when the device 100 lands on the blade 11 can be precisely controlled. Specifically, as illustrated in Fig. 1B, as the device 100 is raised along the rope 20 and approaches the blade 11 with controlled spatial position, the cross-sectional shape of the portion of the blade 11 that the device 100 is approaching is measured. The device 100 may be controlled so that the device 100 lands on the blade with an appropriate landing attitude maintained, while monitoring the measured cross-sectional shape. The device 100 may be controlled, for example, so that tension from at least one of the two ropes 20 or another rope causes the device 100 to move closer to the blade 11 or move away from the blade 11. At least one or another of the two ropes 20 may be operated by a worker or robot, and the worker or robot will manipulate the rope in accordance with instructions from the device 100. The device 100 can be controlled, for example, so that the device 100 is in an appropriate angular position with respect to the blade 11 with a moment by an attitude control means provided in the device 100 (for example, a roll rotation control unit that controls a roll angle, a pitch rotation control unit that controls a pitch angle, or a yaw rotation control unit that controls a yaw angle).

In the example described above, the cross-sectional shape used by the device 100 may be measured while the device 100 is moving on the blade 11 or may be otherwise measured. For example, the cross-sectional shape used by the device 100 may be measured by another measurement device prior to the device 100 moving on the blade 11. Preferably, the cross-sectional shape of the blade 11 may be measured while the device 100 is moving on the blade 11, and more preferably may be measured while the device 100 is performing repair of the blade 11. This is because data of the cross-sectional shape at each stage of repair can be acquired and stored, and these data can be used, for example, to guarantee the repair process. Furthermore, by analyzing the stored data of the cross-sectional shape at each stage, it is possible to manage the progress of repair, adjust the repairs being executed, and the like.

For example, three-dimensional shape data of the blade 11 can be obtained by continuously measuring the cross-sectional shape of the blade along the direction from the distal end toward the root of the blade 11 or the direction in which the leading edge of the blade 11 extends (that is, in the Z direction). The cross-sectional shape represented by the three-dimensional shape data includes a shape of a cross section (X-Y cross section) perpendicular to the direction in which the leading edge of the blade 11 extends (Z direction) and a shape of a cross section (Z-Y cross section or Z-X cross section) parallel to the direction in which the leading of the blade 11 extends (Z direction). By using the three-dimensional shape data, the shape of the blade can be grasped more accurately and easily, and the efficiency of attitude control can be improved. Furthermore, the damaged portion can be specified more accurately and easily, and efficiency of repair work can also be improved.

Note that, in the present specification, "while moving" refers to a period during movement from a certain position to another position, and does not necessarily refer to a continuous movement. For example, a period during which the device 100 is moving from the distal end of the blade toward the root of the blade and during which the device 100 repeatedly moves forward and stops is also included in "while moving".

In the above-described example, it has been described that the maintenance of the blade of the wind turbine is performed using one device 100, but it is also possible to perform the maintenance of the blade of the wind turbine using a plurality of devices 100.

Further, the device 100 can also be used in conjunction with an auxiliary device that holds the rope on the blade 11 and/or an auxiliary device that secures the rope to the root of the blade or to the nacelle. These auxiliary devices may facilitate mounting the device 100 on the blade 11.

Note that, in the above example, it is assumed that the device 100 performs maintenance of the blade of the wind turbine, but the device 100 of the present invention is not limited to the device that performs maintenance. The device 100 of the present invention can be any device as long as it moves on the blade of the wind turbine and performs behavior according to the cross-sectional shape of the blade. The device 100 may be, for example, a device that moves on the blade of a wind turbine while controlling its attitude according to the cross-sectional shape in order to perform measurement (for example, weather observation) on the blade of the wind turbine.

The above-described device 100 can include, for example, a configuration as described below.

### 2. Configuration of device that moves on blade of wind turbine

The device 100 of the present invention can have any configuration as long as it moves on a blade of a wind turbine and performs behavior according to a cross-sectional shape of the blade.

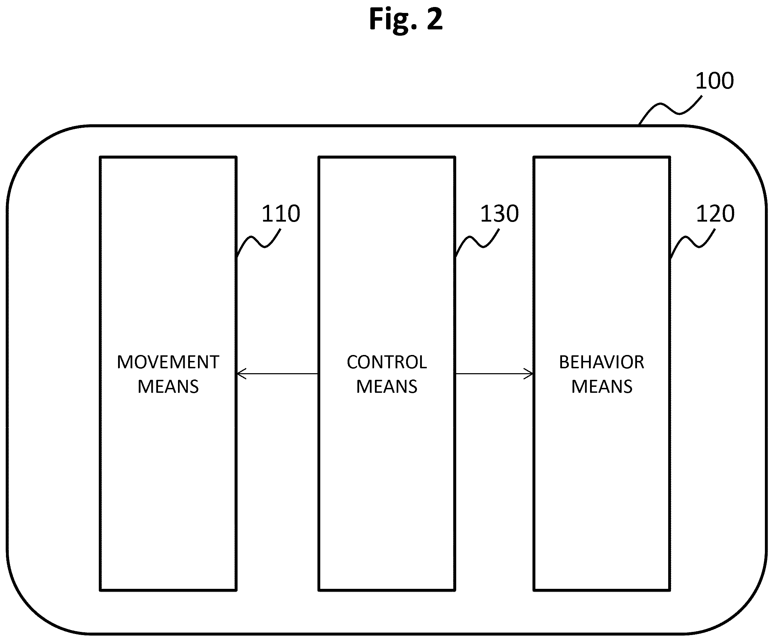

Fig. 2 illustrates a conceptual diagram of a configuration of the device 100 of the present invention.

The device 100 of the present invention includes a movement means 110 for moving along the blade of the wind turbine, a behavior means 120 capable of performing a behavior according to the cross-sectional shape of the blade of the wind turbine, and control means 130 for controlling the behavior means 120 to perform a behavior according to the cross-sectional shape of the blade of the wind turbine.

The movement means 110 may be any means as long as it can move along the blade of the wind turbine.

For example, the movement means 110 includes a winch allowing the device 100 to move along a rope extending on the blade. For example, the movement means 110 includes wheels allowing the device 100 to move on the blade. The wheels may be non-driven wheels, but may also be driven wheels driven by a power source. For example, the device 100 may be configured to move on a blade using a winch and a non-driven wheel, or may be configured to move on a blade using a driven wheel without using a winch (and rope).

The behavior means 120 may be any means as long as it can perform behavior according to the cross-sectional shape of the blade of the wind turbine.

For example, the behavior means 120 can be attitude control means for controlling the attitude of the device 100 according to the cross-sectional shape of the blade of the wind turbine. The attitude control means may be, for example, an actuator mechanism capable of applying a force to the blade of the wind turbine and controlling the attitude of the device 100 by the reaction force. The actuator mechanism includes a working portion and a driving portion that drives the working portion, and by driving the working portion with the driving portion and applying a force to the blade with the working portion, the attitude of the device 100 can be controlled by the reaction force. The actuator mechanism may be any mechanism as long as it can apply a force to the blade of the wind turbine. For example, the actuator mechanism may be a mechanism having a linear motion cylinder as a driving portion and having a working portion at a distal end of the linear motion cylinder. For example, a force can be applied to the blade by pressing the driving portion of the distal end of the linear motion cylinder against the blade by linear motion of the linear motion cylinder. The linear motion cylinder may be, for example, an electric type or a pneumatic type. For example, the actuator mechanism may be a mechanism having a linear motion cylinder as a driving portion and an arm to which the linear motion cylinder is connected as a working portion. For example, a pneumatic cylinder is connected to a root of the arm, and a force can be applied to the blade by pivoting the arm by linear motion of the pneumatic cylinder to press a distal end of the arm (for example, wheels or rollers) against the blade. For example, the actuator mechanism may be a winch, which is also the movement means 110. For example, by stopping one of the winches on both sides of the device 100 and moving the other winch, torque around the device can be generated, and the attitude of the device 100 can be controlled by the torque.

Besides the attitude control means that controls the attitude by applying a force to the blade of the wind turbine or in place of the attitude control means that controls the attitude by applying a force to the blade of the wind turbine, the attitude control means may include, for example, the attitude control means that controls the attitude of the device 100 without contacting the blade of the wind turbine. This may be useful, for example, when the device 100 controls the attitude of the device 100 when it lands on the blade of the wind turbine. Such attitude control means includes, for example, but are not limited to, a rope fixed or connected to the device 100, a rotatable counterweight, a winch, and the like.

For example, the behavior means 120 may be maintenance means for repairing damaged portions of the blade of the wind turbine according to the cross-sectional shape of the blade of the wind turbine. The maintenance means may repair the damaged portion so as to achieve a surface shape after repair, which is estimated based on the cross-sectional shape. The maintenance means includes, for example, an applying means for applying a material such as putty, adhesive, or sealant to the damaged portion, and a polishing means for polishing so as to be smoothly connected to the undamaged portion. For example, the applying means can also apply a paint to the polished surface. The maintenance means can further include cleaning means for cleaning the surface, such as before applying the material or after polishing, and/or grinding means for grinding the surface before applying the material. The maintenance means can also include, for example, an sticking means that sticks a protective material (for example, a surface protective material such as a film sheet) to the polished surface.

The applying means may be any means capable of applying a material to an object. The material applied by the applying means includes, for example, paint, putty, adhesive, and sealant. For example, the applying means may be a spraying device capable of spraying a paint. When the paint is applied to the blade using such a spraying device, the paint can be applied to the target portion by moving the spraying device as the device 100 moves on the blade, or the paint can be applied to the target portion by moving the spraying device itself in a state where the device 100 is stationary. For example, the applying means may be a caulking gun capable of extruding putty, adhesive, sealant, and the like. When such a caulking gun is used to apply a material, such as putty, adhesive, or sealant, to a blade, the material can be applied to a target location by moving the caulking gun as the device 100 moves on the blade 11, or by moving the caulking gun while the device 100 is stationary.

The polishing means may be any means capable of polishing an object. For example, the polishing means may be a mechanism for polishing using sandpaper, a grinder, a disc grinder, or the like. When the surface of the blade is polished using such a mechanism, the surface can be polished by moving the sandpaper, grinder, or disc grinder as the device 100 moves on the blade; or the surface can be polished by moving the sandpaper, grinder, or disc grinder while the device 100 is stationary.

The cleaning means may be any means capable of cleaning an object. For example, the cleaning means may be a mechanism that wipes dirt using a cleaning liquid and a waste cloth. When the surface of the blade is cleaned using such a mechanism, the surface can be cleaned by moving the waste cloth as the device 100 moves on the blade, or the surface can be cleaned by moving the waste cloth while the device 100 is stationary.

The grinding means may be any means capable of grinding an object. For example, the grinding means may be a mechanism for grinding using a leutor (or a hand grinder or a precision grinder), a belt sander, or the like. When grinding a surface of the blade with such a mechanism, the surface can be ground by moving the leutor or belt sander as the device 100 moves on the blade, or by moving the leutor or belt sander while the device 100 is stationary.

Note that the maintenance means is not limited to the cleaning means, the polishing means, the grinding means, the sticking means, and the applying means described above. The device 100 may include other means (for example, an imaging means, a conduction inspection means, and the like) for performing maintenance instead of or in addition to the means described above.

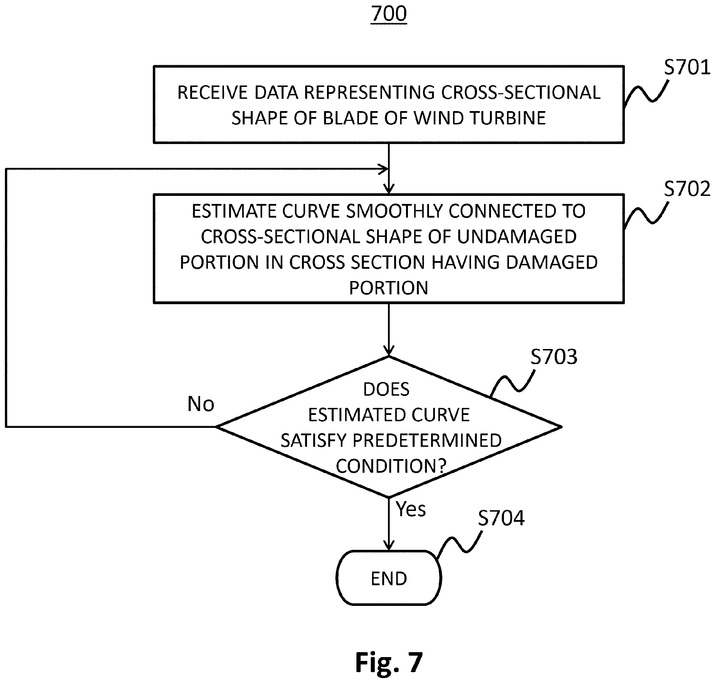

The behavior means 120 may be, for example, a determination means that determines whether or not the blade should be repaired based on the cross-sectional shape of the blade. The determination means compares a cross-sectional shape in an undamaged state or an ideal state after repair, or a cross-sectional shape after repair estimated based on the measured cross-sectional shape with the measured cross-sectional shape, and can determine that the blade should be repaired when a difference or deviation therebetween is equal to or greater than a predetermined threshold. Here, the predetermined threshold can be appropriately set on site. In addition, the cross-sectional shape after repair can be estimated by, for example, processing to be described below with reference to Fig. 7.

The behavior means 120 may, for example, be specification means for specifying the damaged portion of the blade based on the cross-sectional shape of the blade. The specification means can compare a cross-sectional shape in an undamaged state or an ideal state after repair, or a cross-sectional shape after repair estimated based on the measured cross-sectional shape with the measured cross-sectional shape, and can specify a portion where a difference or deviation therebetween is equal to or greater than a predetermined threshold as a damaged portion. Here, the predetermined threshold can be appropriately set on site. In addition, the cross-sectional shape after repair can be estimated by, for example, processing to be described later with reference to Fig. 7.

The control means 130 may be any means as long as the behavior means 120 can be controlled to perform a behavior according to the cross-sectional shape of the blade of the wind turbine. The control means 130 can be implemented, for example, by a processor operatively coupled to the behavior means 120. The processor may control the behavior means 120, for example by sending a control signal to the behavior means 120. For example, the behavior means 120 as the determination means or the specification means may be implemented by a processor, similar to the control means 130.

The control means 130 can, for example, control the behavior means 120 so that the behavior means 120 (attitude control means) controls the attitude of the device 100 according to the cross-sectional shape.

The control means 130 may, for example, control the behavior means 120 so that the behavior means 120 (maintenance means) repairs the damaged portion of the blade according to the cross-sectional shape. In this regard, the control means 130 controls the behavior means 120 so that the behavior means 120 (maintenance means) repairs the damaged portion of the blade according to the cross-sectional shape so as to achieve the surface shape after repair estimated based on the cross-sectional shape. The surface shape after repair may be estimated by the control means 130, or may be estimated outside the device 100 and transmitted from the outside of the device 100 to the control means 130 of the device 100. The surface shape after repair can be estimated, for example, by processing described below with reference to Fig. 7.

The control means 130 is configured to receive data representing the cross-sectional shape of the blade. The data representing the cross-sectional shape of the blade may be, for example, point cloud data. The data representing the cross-sectional shape of the blade may be obtained by the device 100 measuring the cross-sectional shape, or may be obtained by a device other than the device 100 measuring the cross-sectional shape.

If the device 100 measures a cross-sectional shape, the device 100 may include measurement means. The measurement means may be any means capable of measuring the cross-sectional shape, and may be, for example, a laser scanner, an ultrasonic scanner, or the like. The measurement means may be a contact sensor. The measurement means can measure the cross-sectional shape with a predetermined resolution. The measurement means can, for example, measure a cross-sectional shape of a blade position where the device passes when the device 100 is moving on the blade. Alternatively, the measurement means can measure a cross-sectional shape of a blade position where the device approaches, for example when the device 100 is approaching the blade.

When a device other than the device 100 measures a cross-sectional shape, for example, a measurement device separate from the device 100 measures the cross-sectional shape of the blade before the device 100 moves on the blade. Another measurement device can measure the cross-sectional shape with a predetermined resolution.

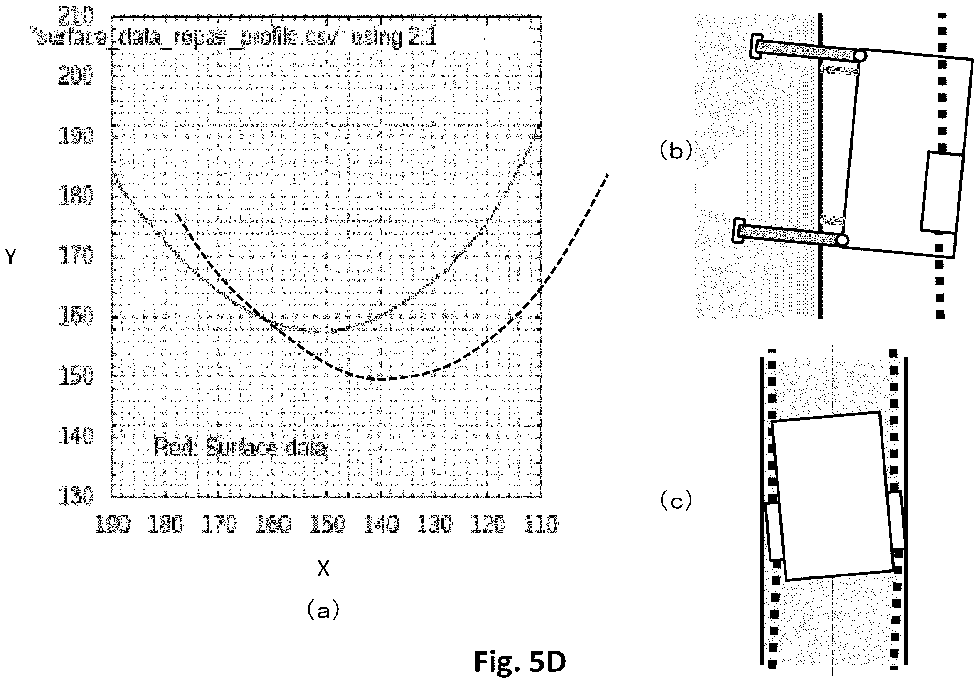

Data representing the cross-sectional shape of the blade may preferably also represent a relative position of the cross-sectional shape of the blade with respect to the measurement means. For example, the data representing the cross-sectional shape of the blade can be expressed by position coordinates on a two-dimensional plane having the position of the measurement means as the origin with respect to each of the plurality of points constituting the cross-sectional shape. Thus, data representing the cross-sectional shape of the blade can be plotted or drawn in a two-dimensional plane, for example, as illustrated in Fig. 5D(a).

Data representing the measured cross-sectional shape may be passed to the control means 130 or to an estimation means external to the device 100 for estimation of the surface shape after repair. The estimation means external to the device 100 can be implemented, for example, by a processor of a computer external to the device 100.

Data representing the measured cross-sectional shape may be stored in a storage means that the device 100 may include, or may be passed to and stored in a storage means external to the device 100. The data representing the stored cross-sectional shape may be, for example, data representing the cross-sectional shape at each stage of repair, which can be used to guarantee the repair process. Furthermore, data representing the cross-sectional shape at each stage of repair can also be used to manage the progress of repair and adjust the repair process.

For example, determination means for determining whether or not the blade should be repaired based on the cross-sectional shape of the blade and/or specification means for specifying a damaged portion of the blade based on the cross-sectional shape of the blade may be external to the device 100. The determination means or the specification means can determine necessity of repair or specify the damaged portion based on the data representing the cross-sectional shape transmitted from the device 100 or the stored data representing the cross-sectional shape. Data indicating the determined repair necessity or specified damaged portion may be transmitted to the device 100. Thus, the present invention is directed not only to the device 100 or a method implemented by the device 100, but also to a method implemented outside the device 100 for the device 100, or the like.

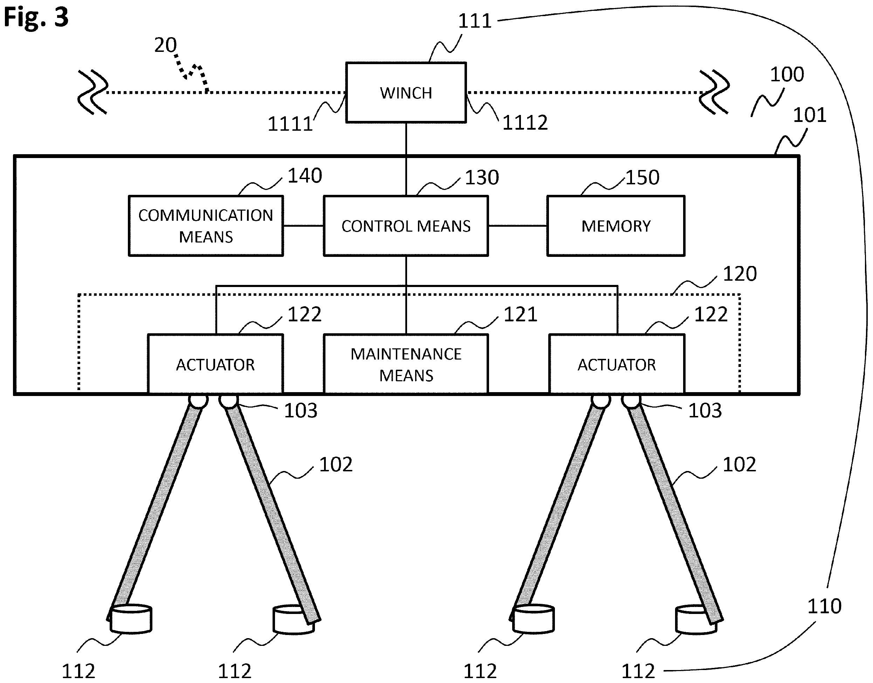

Fig. 3 illustrates an example of a configuration of the device 100.

The device 100 includes a movement means 110, a behavior means 120 and a control means 130.

The movement means 110 includes a winch 111 and wheels 112. The winch 111 is mounted on a main body 101 of the device 100. The wheel 112 is mounted on an arm 102 extending from the main body 101.

The winch 111 may be a mechanism connectable to the rope 20. For example, the rope 20 enters the winch 111 from a first end 1111 of the winch 111, connects to the winch 111, and exits the winch 111 from a second end 1112. As the winch 111 winds the rope 20 into the first end 1111 (unwinds the rope 20 from the second end 1112), the device 100 moves in a direction of the first end 1111 (leftward in Fig. 3). As the winch 111 winds the rope 20 into the second end 1112 (unwinds the rope 20 from the first end 1111), the device 100 moves in a direction of the second end 1112 (rightward in Fig. 3). The winch 111 can be controlled in its winding operation by the control means 120. The winch 111 winds up the rope 20 in accordance with a control signal from the control means 130.

Note that the rope 20 may or may not pass through the winch 111. That is, the rope 20 may enter from one end of the winch 111 and may or may not exit from the other end. If the rope 20 does not pass the winch 111, the rope 20 need not extend between the device 100 and the ground. For example, as the winch 111 winds up a rope extending between the nacelle 14 of the wind turbine (see Fig. 1D) and the device 100, the device 100 moves in a direction toward the nacelle 14 of the wind turbine. For example, the winch 111 moves away from the nacelle 14 of the wind turbine by unreeling a rope extending between the nacelle 14 of the wind turbine and the device 100.

The wheel 112 is a wheel that assists the device 100 to move smoothly when the winch 111 winds up the rope 20 to move the device. The wheel 112 is a non-driven wheel, but may be a driven wheel. In the case of a driven wheel, the driving of the wheel 112 can be controlled by the control means 130. The wheel 112 rotates according to a control signal from the control means 130.

In the above-described example, it has been described that the device 100 includes the winch. However, for example, instead of the device 100 including the winch, the nacelle 14 (Fig. 1D) of the wind turbine may include the winch. In this case, a rope extending from the winch of the nacelle 14 of the wind turbine may be fixed to the device 100, and the winch of the nacelle 14 of the wind turbine may wind or unwind the rope so that the device 100 moves to and on the blade 11.

The behavior means 120 includes a maintenance means 121 and an actuator 122.

The maintenance means 121 is means for performing maintenance of the blade, and can repair the damaged portion so as to achieve the surface shape after repair estimated based on the cross-sectional shape. As described above, the maintenance means 121 includes an applying means and a polishing means, and may further include a cleaning means and/or a grinding means.

The operation of the maintenance means 121 can be controlled by the control means 130. The maintenance means 121 may be controlled to repair the damaged portion of the blade according to the cross-sectional shape, in particular to repair the damaged portion of the blade so as to achieve a surface shape after repair estimated based on the cross-sectional shape. For example, the cleaning means of the maintenance means 121 are controlled to clean the damaged portion and remove foreign material, then the applying means of the maintenance means 121 are controlled to apply material to the damaged portion, and then the polishing means of the maintenance means 121 are controlled to polish the applied material, so as to achieve the surface shape after repair estimated based on the cross-sectional shape. The applying means can, for example, be controlled so as to apply the required amount of material to the required extent in order to achieve the surface shape after repair estimated based on the cross-sectional shape. The polishing means may, for example, be controlled so as to polish the applied material by an amount necessary to achieve the surface shape after repair estimated based on the cross-sectional shape. Thus, the estimated surface shape after repair can be achieved.

For example, before the applying means is controlled to apply the material to the damaged portion, the grinding means of the maintenance means 121 may be controlled to grind the damaged portion so that the material is easily applied to the damaged portion. For example, after the polishing means polishes the applied material, the cleaning means of the maintenance means 121 may be controlled to clean the polished surface. For example, after the polishing means polishes the applied material or after the cleaning means cleans the surface, the applying means of the maintenance means 121 may be controlled to apply the paint, or the sticking means of the maintenance means 121 may be controlled to stick the protective material.

Note that the maintenance means 120 is not limited to the above-described means. The maintenance means 120 may include other means for performing maintenance instead of or in addition to the means described above.

The actuator 122 constitutes an attitude control means.

For example, the actuator 122 constitutes an attitude control means together with a contact portion with a blade connected to the actuator 122. At this time, the actuator 122 drives the contact portion to press the contact portion against the blade. The attitude of the device 100 is controlled by the reaction force at this time.

For example, the actuator 122 constitutes attitude control means together with the arm 102 and the wheel 112. At this time, the actuator 122 drives the arm to pivot about the axis 103 to press the wheel 112 against the blade. The attitude of the device 100 can be controlled by the reaction force at this time.

The actuator 122 may be, for example, an electric cylinder or a pneumatic cylinder.

The device 100 further includes a communication means 140 and a memory 150.

The communication means 140 is any means for receiving a signal from outside the device 100 and transmitting a signal to outside the device 100. The communication means 140 may receive a signal from the outside of the device 100 in a wireless manner or in a wired manner. The communication means 140 may transmit a signal to the outside of the device 100 in a wireless manner or in a wired manner. For example, the communication means 140 can receive a signal for controlling each operation of the device 100 from the outside of the device 100 (for example, the operation terminal used by the operator). The communication means 140 can transmit, for example, data representing the cross-sectional shape measured by the measurement means to the outside of the device 100 (for example, an estimation means for estimating a surface shape after repair, a determination means for determining necessity of repair, a specification means for specifying a damaged portion, a storage means for storing data representing a cross-sectional shape, and the like). The communication means 140 can receive, for example, data representing the estimated surface shape after repair from the outside of the device 100 (for example, an estimation means for estimating a surface shape after repair, a determination means for determining necessity of repair, a specification means for specifying a damaged portion, and the like).

The memory 150 stores a program required for executing processing of the device 100, data required for executing the program, and the like. The memory 150 may be implemented by any storage means.

The device 100 may be configured as a passive device in which each operation is controlled according to a signal from the outside of the device 100, or may be configured as an active device that autonomously performs each operation. In the latter case, for example, a program for implementing a series of operations for performing maintenance of the blade or a program for executing the processing illustrated in Fig. 7 may be stored in the memory 150 of the device 100, and the control means 130 of the device 100 can cause the device 100 to function as a device for automatically performing maintenance of the blade by reading and executing the program. The program may be stored in a non-transitory computer-readable storage medium, and the device 100 may execute the processing illustrated in Fig. 7 by reading the program.

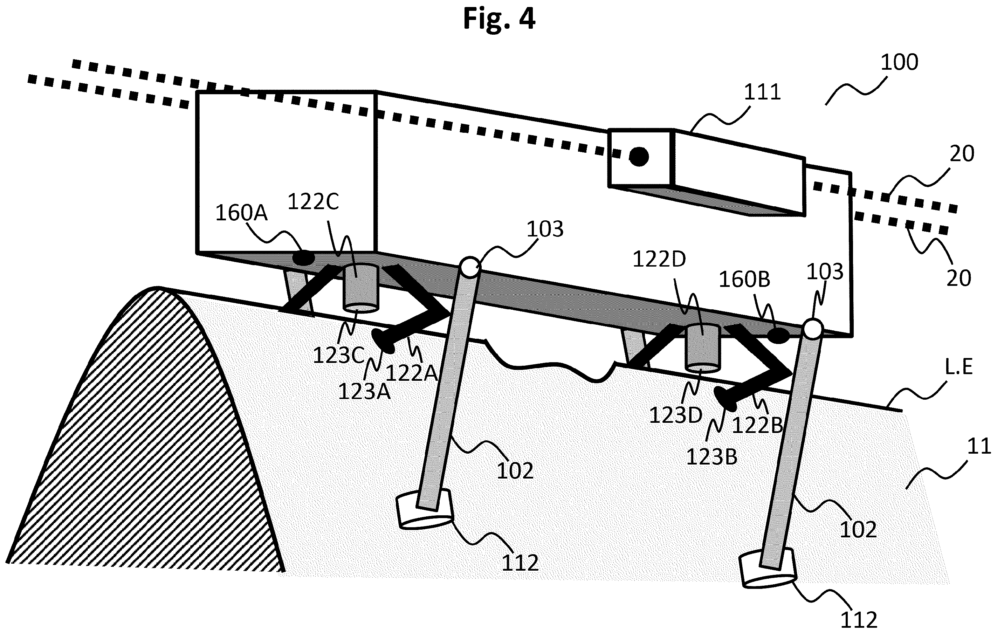

Fig. 4 schematically illustrates how the device 100 moves on the blade 11. In Fig. 4, a portion of the blade 11 is illustrated with a cross-section. L.E represents the leading edge of the blade 11. In Fig. 4, the device 100 is briefly described, and for example, the maintenance means 121 is omitted.

The device 100 includes a winch 111 and a wheel 112 as the movement means 110, and the rope 20 passes through the winch 111. As the winch 111 winds or unwinds the rope 20, the device 100 can move on the blade 11 in the direction in which the rope extends (that is, the direction in which the leading edge L.E runs).

The device 100 includes an attitude control means as the behavior means 120, and the attitude control means is constituted by actuators 122A to 122D and contact portions 123A to 123D. Furthermore, the attitude control means can also be constituted by an actuator connected to the arm 102 and a wheel 112 coupled to the arm 102. The arm 102 is pivotable about a pivot axis 103. Furthermore, the attitude control means can also be constituted by a winch 111.

The attitude control means constituted by the actuators 122A to 122D and the contact portions 123A to 123D drives the actuators 122A to 122D to press the contact portions 123A to 123D against the blade. The attitude control means constituted by the actuator 122A and the contact portion 122A, and the attitude control means constituted by the actuator 122B and the contact portion 122B, are arranged in pairs on both sides of the device 100 so as to face each other. This allows a force to be applied from both sides of the blade (both sides with respect to the leading edge L.E). The attitude control means constituted by the actuator 122C and the contact portion 122C, and the attitude control means constituted by the actuator 122C and the contact portion 122C, are arranged on the front side and the rear side along the central axis extending in the traveling direction of the device 100, respectively. This allows a force to be applied to around the leading edge L.E of the blade.

While the device 100 is moving, the device 100 can measure the cross-sectional shape of the blade 11 using the measurement means 160A and 160B. The measurement means 160A is arranged on the front side of the device 100 and can measure the cross-sectional shape of the blade 11 on the front side of the device 100. The measurement means 160B is arranged on the rear side of the device and can measure the cross-sectional shape of the blade 11 on the rear side of the device 100. The control means of the device 100 can control the attitude control means so as to control the attitude of the device 100 according to the cross-sectional shape measured by the measurement means 160A and/or 160B.

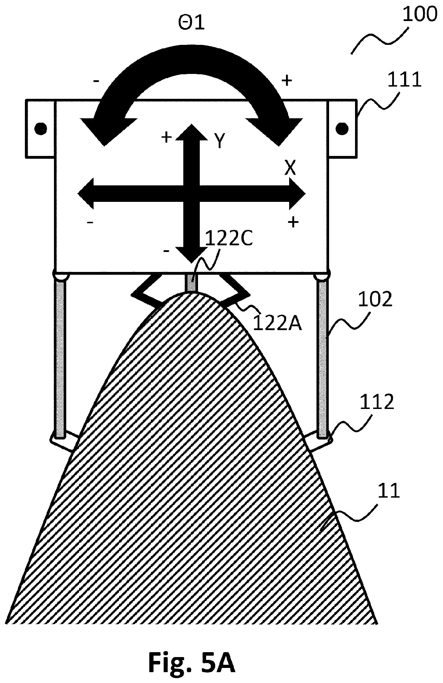

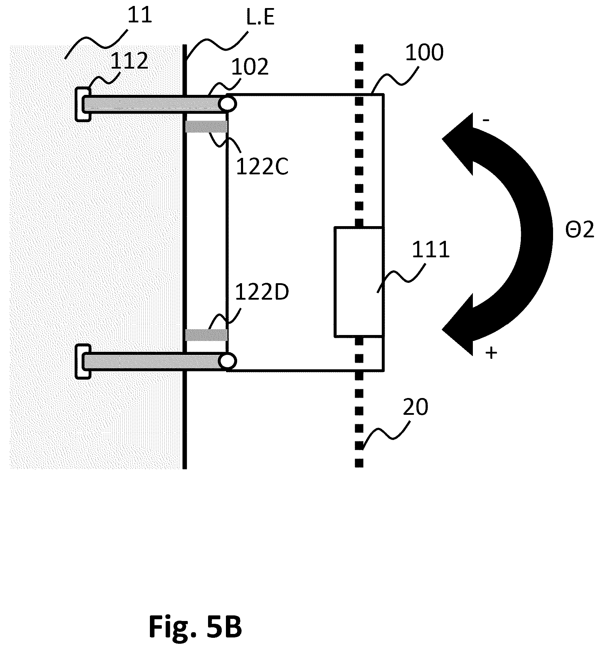

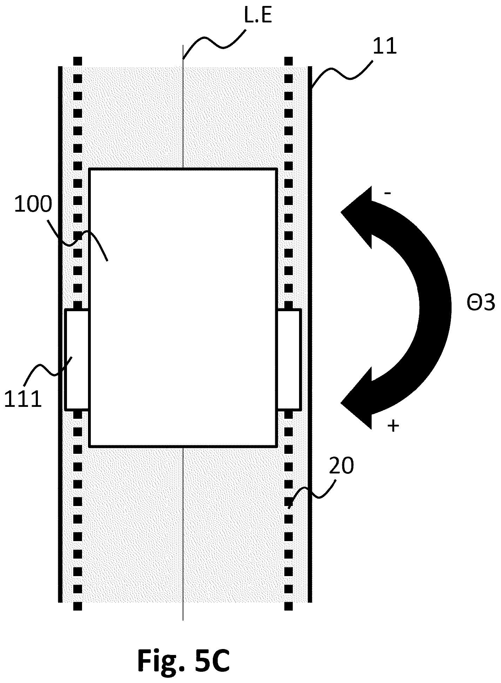

Figs. 5A to 5C schematically illustrate controlling the attitude of the device 100 by means of attitude control means. Fig. 5A illustrates a top view of the device 100, Fig. 5B illustrates a side view of the device 100, and Fig. 5C illustrates a rear view of the device 100. Figs. 5A to 5C illustrate the device 100 as it moves on the blade 11. In Fig. 5A, a cross-section of the blade 11 is illustrated. In Fig. 5B, the actuators 122A and B are omitted.

The attitude control means of the device 100 can control the attitude of the device by adjusting the position and/or orientation of the device in the direction of the arrows illustrated in Figs. 5A to 5C. An X direction illustrated in Fig. 5A is a left-right direction perpendicular to the traveling direction of the device 100, and the right in Fig. 5A indicates the + direction and the left in Fig. 5A indicates the - direction. A Y direction illustrated in Fig. 5A is an up-down direction perpendicular to the traveling direction of the device 100, and the upper side in Fig. 5A indicates the + direction and the lower side thereof indicates the - direction. A θ1 direction illustrated in Fig. 5A is a roll direction of the device 100, and a clockwise direction indicates the + direction and a counterclockwise direction indicates the - direction. A θ2 direction illustrated in Fig. 5B is a pitch direction of the device 100, and a clockwise direction indicates the + direction and a counterclockwise direction indicates the - direction. A θ3 direction illustrated in Fig. 5C is a yaw direction of the device 100, and a clockwise direction indicates the + direction and a counterclockwise direction indicates the - direction.

For example, the control means of the device 100 controls the actuators 122A and 122B of the attitude control means to press the contact portions 123A and 123B (not illustrated) at the distal ends of the actuators 122A and 122B against the blade 11, so that the position of the device 100 in the X direction can be adjusted by the reaction force. For example, by controlling the right actuator 122A of the pair of actuators 122A in Fig. 5A to press the right contact portion 123A against the blade 11, the device 100 is adjusted in position in the +X direction. For example, by controlling the left actuator 122A of the pair of actuators 122A in Fig. 5A to press the left contact portion 123A against the blade 11, the device 100 is adjusted in position in the -X direction.

For example, the control means of the device 100 controls the actuators 122C and 122D of the attitude control means to press the contact portions 123C and 123D (not illustrated) at the distal ends of the actuators 122C and 122D against the blade 11, so that the position of the device 100 in the Y-direction can be adjusted by the reaction force. For example, by controlling the actuator 122C to press the contact portion 123C against the blade 11, the position of the device 100 is adjusted in the +Y direction. For example, if the contact portion 123C is not pressed against the blade 11 without controlling the actuator 122C, the gravity of the device 100 adjusts the position of the device 100 in the -Y direction. At this time, the actuator 122D not illustrated in Fig. 5A is similarly controlled.

For example, the control means of the device 100 controls an actuator connected to the arm 102 of the attitude control means, and pivots the arm to press the wheel 112 at the distal end of the arm against the blade 11, so that the θ1 direction orientation of the device 100 can be adjusted in the θ1 direction by the reaction force. At this time, the winch 111 of the attitude control means may also be controlled to change the load of the device 100 to trigger an operation, thereby facilitating the adjustment of the orientation of the device 100 in the θ1 direction. For example, by controlling an actuator connected to the right arm 102 of the pair of arms 102 in Fig. 5A to press the wheel 112 of the right arm against the blade 11, the orientation of the device 100 is adjusted in the +θ1 direction. At this time, the right-side winch 111 of the winches 111 in Fig. 5A is controlled to change the load of the device 100, so that it is possible to trigger an operation of controlling the attitude. For example, by controlling an actuator connected to the left arm 102 of the pair of arms 102 in Fig. 5A to press the wheel 112 of the left arm against the blade 11, the orientation of the device 100 is adjusted in the -θ1 direction. At this time, the left-side winch 111 of the winches 111 in Fig. 5A can be controlled to change the load of the device 100 to trigger the operation to control the attitude.

For example, the control means of the device 100 controls the actuators 122C and 122D of the attitude control means to press the contact portions 123C and 123D (not illustrated) at the distal ends of the actuators 122C and 122D against the blade 11, so that the orientation of the device 100 can be adjusted in the θ2 direction by the reaction force. For example, the actuator 122C is controlled to press the contact portion 123C against the blade 11, and the actuator 122D is not driven at this time, whereby the orientation of the device 100 is adjusted in the +θ2 direction. For example, the actuator 122D is controlled to press the contact portion 123D against the blade 11, and the actuator 122C is not driven at this time, whereby the orientation of the device 100 is adjusted in the -θ2 direction.

For example, the control means of the device 100 controls the actuators 122A and 122B of the attitude control means to press the contact portions 123A and 123B (not illustrated) at the distal ends of the actuators 122A and 122B against the blade 11, so that the orientation of the device 100 can be adjusted in the θ3 direction by the reaction force. For example, by controlling the actuator 122A (not illustrated) on the right side of the leading edge L.E in Fig. 5C to press the contact portion 123A on the right side against the blade 11, and controlling the actuator 122B (not illustrated) on the left side of the leading edge L.E in Fig. 5C to press the contact portion 123B on the left side against the blade 11, the orientation of the device 100 is adjusted in the +θ3 direction. For example, by controlling the actuator 122A (not illustrated) on the left side of the leading edge L.E in Fig. 5C to press the left contact portion 123A against the blade 11 and controlling the actuator 122B (not illustrated) on the right side of the leading edge L.E in Fig. 5C to press the right contact portion 123B against the blade 11, the orientation of the device 100 is adjusted in the -θ3 direction. Alternatively or additionally, the control means of the device 100 can control the winch 111 of the attitude control means to generate a torque around the device 100, thereby adjusting the orientation of the device 100 in the θ3 direction with that torque. For example, the winch on the left in Fig. 5C pulls the rope downward in Fig. 5C, and the winch on the right in Fig. 5C pulls the rope upward in Fig. 5C, thereby adjusting the orientation of the device 100 in the +θ3 direction. For example, the winch on the left in Fig. 5C pulls the rope upward in Fig. 5C, and the winch on the right in Fig. 5C pulls the rope downward in Fig. 5C, thereby adjusting the orientation of the device 100 in the -θ3 direction.

In this manner, the control means can control the attitude of the device 100 by adjusting at least one of the X and Y direction positions and the θ1, θ2, and θ3 direction orientations. For example, the control means can adjust at least one of the X and Y direction positions and the θ1, θ2, and θ3 direction orientations so that a line connecting the peak in the cross-sectional shape measured by the measurement means 160A and the peak in the cross-sectional shape measured by the measurement means 160B is parallel to the central axis in the traveling direction of the device 100.

Fig. 5D(a) illustrates an example of data representing the cross-sectional shapes measured by the measurement means 160A and 160B, Fig. 5D(b) illustrates a side view illustrating the attitude of the device 100 at that time, and Fig. 5D(c) illustrates a rear view illustrating the attitude of the device 100 at that time. In Fig. SD(a), the horizontal axis represents the X direction (left-right direction) illustrated in Fig. 5A, and the vertical axis represents the Y direction (up-down direction) illustrated in Fig. 5A.

In Fig. SD(a), for example, it is assumed that the cross-sectional shape of the blade 11 measured by the measurement means 160A is data represented by a solid line and the cross-sectional shape of the blade 11 measured by the measurement means 160B is data represented by a broken line.

For example, the control means controls the attitude control means so as to adjust at least one of the X and Y direction positions and the θ1, θ2, and θ3 direction orientations so that the data of the cross-sectional shape of the blade 11 measured by the measurement means 160A and the data of the cross-sectional shape of the blade 11 measured by the measurement means 160B match. In the example illustrated in Fig. 5D, for example, at least one of the X and Y direction positions and the θ1, θ2, and θ3 direction directions is adjusted so that the peak of the data of the cross-sectional shape of the blade 11 measured by the measurement means 160B is at X=150 and Y=159 (for example, the attitude control means is controlled to adjust the orientation of the device 100 in the -θ2 direction and the +θ3 direction). As a result, a line connecting the peak in the cross-sectional shape measured by the measurement means 160A and the peak in the cross-sectional shape measured by the measurement means 160B is parallel to the central axis in the traveling direction of the device 100.

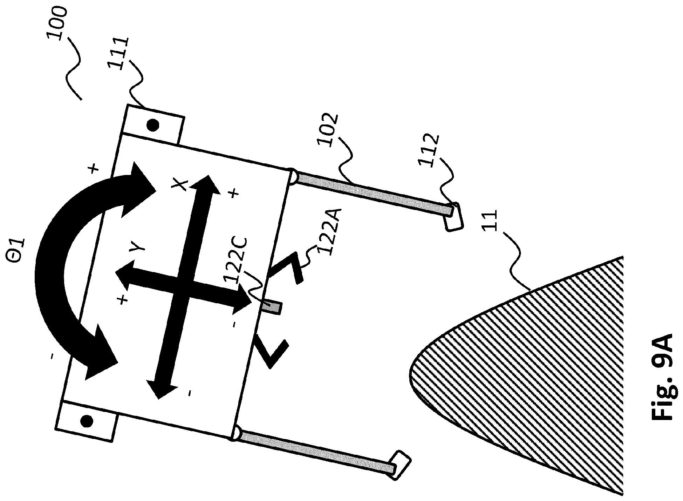

Figs. 9A to 9C schematically illustrate controlling the attitude of the device 100 by attitude control means when the device 100 lands on the blade. Figs. 9A to 9C illustrate plan views of the device 100, illustrating a cross-section of the blade 11.

The attitude control means of the device 100 can control the attitude of the device by adjusting the position and/or orientation of the device in the direction of the arrows illustrated in Figs. 9A to 9C. The X direction illustrated in Fig. 9A is a left-right direction perpendicular to the traveling direction of the device 100, and the right in Fig. 9A indicates the + direction and the left in Fig. 9A indicates the - direction. The Y direction illustrated in Fig. 9A is an up-down direction perpendicular to the traveling direction of the device 100, and the upper side in Fig. 9A indicates the + direction and the lower side in Fig. 9A indicates the - direction. A θ1 direction illustrated in Fig. 9A is a roll direction of the device 100, and a clockwise direction indicates the + direction and a counterclockwise direction indicates the - direction.

For example, if the device 100 is tilted in the +θ1 direction relative to the blade 11, as illustrated in Fig. 9A, the control means of the device 100 can control the attitude control means to adjust the angular position of the device by generating a moment that causes the device 100 to rotate in the -θ1 direction.

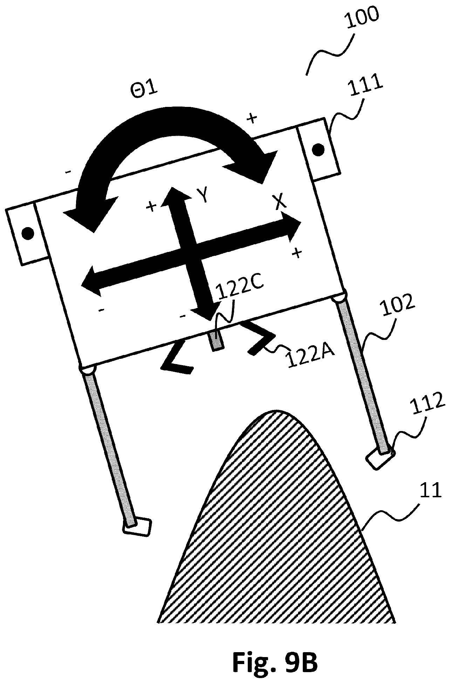

For example, if the device 100 is tilted in the -θ1 direction relative to the blade 11, as illustrated in Fig. 9B, the control means of the device 100 can control the attitude control means to adjust the angular position of the device by generating a moment that causes the device 100 to rotate in the +θ1 direction.

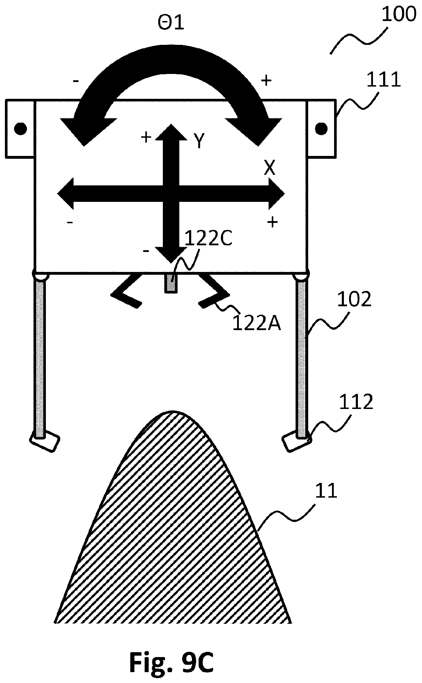

For example, as a result of adjusting the angular position, as illustrated in Fig. 9C, when the device 100 faces blade 11, a rope or the like connected to the device 100 may cause the device 100 to move in the -Y direction and cause the device 100 to land on blade 11.

In the example described above, the device 100 has been described, but some of the components of the device 100 may be external to the device 100. That is, a system including the device 100 may be configured. For example, as described above, the nacelle of the wind turbine may include a winch that is a part of the movement means. For example, the control means 130 may be provided outside the device 100.

### 3. Method for controlling device that moves on blade of wind turbine

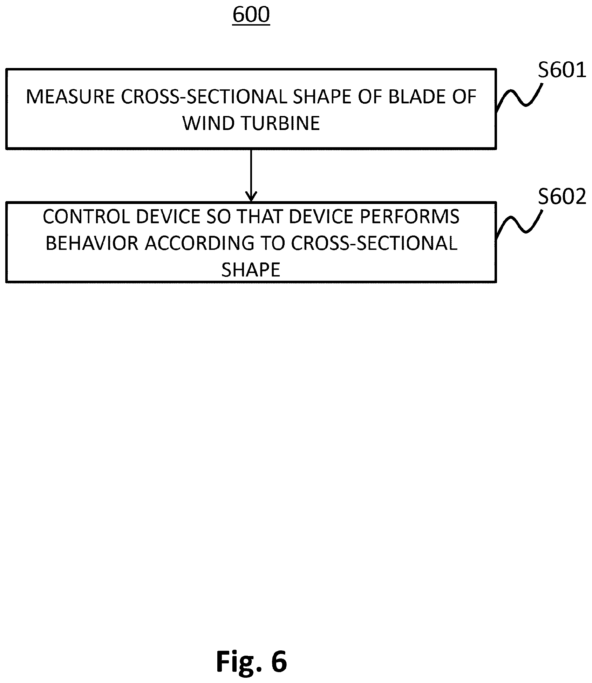

Fig. 6 is a flowchart illustrating an example of a control method 600 of the device 100 that moves on a blade of the wind turbine. By controlling the device 100 according to the control method 600, the device 100 can perform behavior according to a cross-sectional shape of a blade, preferably a cross-sectional shape of a position on the blade where the device 100 is located.

In step S601, a cross-sectional shape of a blade of the wind turbine is measured. Step S601 may be performed by, for example, a measurement means of the device 100, or may be performed by a measurement device separate from the device 100.

If the cross-sectional shape of the blade is measured by the measurement means of the device 100, the measurement means of the device 100 can measure the cross-sectional shape while the device 100 is moving on the blade. The measurement means can measure the cross-sectional shape of the blade at least at one location in the direction along the blade (that is, the direction extending from the distal end to the base of the blade). Preferably, the measurement means measures a cross-sectional shape of a cross-section having a damaged portion. More preferably, in addition to the cross-sectional shape of the cross-section having the damaged portion, the measurement means can also measure a cross-sectional shape of a cross-section having no damaged portion. In another example, preferably the measurement means measures a cross-sectional shape of the blade at a position on the front side in the traveling direction of the device 100, or a cross-sectional shape of the blade at a position in the center of the device 100, or a cross-sectional shape of the blade at a position on the rear side in the traveling direction of the device 100. More preferably, the measurement means can measure the cross-sectional shape of the blade at the position on the front side in the traveling direction of the device 100 and the cross-sectional shape of the blade at the position on the rear side in the traveling direction of the device 100.

In a case where the cross-sectional shape of the blade is measured by a measurement device separate from the device 100, a device separate from the device 100 may measure the cross-sectional shape of the blade prior to the device 100 moving on the blade 11. For example, a device separate from the device 100 may measure the cross-sectional shape of the blade while moving on the blade or may measure the cross-sectional shape of the blade while flying around the blade.

Data representing the measured cross-sectional shape is passed to the control means 130 of the device 100 or to an estimation means external to the device 100.

In step S602, the device 100 controls the device 100 so as to perform a behavior according to the cross-sectional shape measured in step S601. Step S602 is performed by the control means 130 of the device 100.

The control means 130 can, for example, control the device 100 so that the device 100 controls the attitude of the device 100 according to the cross-sectional shape. This is achieved by the control means 130 controlling the attitude control means.

The control means 130 can determine the position or orientation of the device 100 relative to the blade, since the data representing the cross-sectional shape can represent the relative position of the cross-section of the blade with respect to the measurement means.

For example, in a case where the control means 130 determines, based on the data representing the cross-sectional shape measured in step S601, that the position of the device 100 is deviated from the position where the device should be (for example, a position where the center of the device 100 is directly above the leading edge of the blade), the control means 100 can control the attitude control means to adjust the position and/or orientation of the device 100. For example, in a case where the control means 130 determines, based on the data representing the cross-sectional shape measured in step S601, that the orientation of the device 100 is deviated from the orientation in which the leading edge of the blade extends (for example, the traveling direction of the device 100 and a direction in which the leading edge of the blade extends are not parallel), the control means 100 may control the attitude control means to adjust the position and/or orientation of the device 100.

The control means 130 can, for example, control the device 100 so that the device 100 repairs the damaged portion of the blade according to the cross-sectional shape. This is achieved by the control means 130 controlling the maintenance means 121. The control means 130 can control the maintenance means 121 so that the maintenance means 121 achieves the surface shape after repair estimated based on the cross-sectional shape measured in step S601. Thus, the maintenance means repairs the damaged portion so as to achieve the estimated surface shape after repair. In the maintenance means, for example, the cleaning means of the maintenance means 121 is controlled to clean the damaged portion and remove foreign matter, then the applying means of the maintenance means 121 are controlled to apply material to the damaged portion, and then the polishing means of the maintenance means 121 is controlled to polish the applied material, so as to achieve the surface shape after repair estimated based on the cross-sectional shape. The applying means can, for example, be controlled so as to apply the required amount of material to the required extent in order to achieve the surface shape after repair estimated based on the cross-sectional shape. The polishing means may, for example, be controlled so as to polish the applied material by an amount necessary to achieve the surface shape after repair estimated based on the cross-sectional shape. Thus, the estimated surface shape after repair can be achieved.

For example, before the applying means is controlled to apply the material to the damaged portion, the grinding means of the maintenance means 121 may be controlled to grind the damaged portion so that the material is easily applied to the damaged portion. For example, after the polishing means polishes the applied material, the cleaning means of the maintenance means 121 may be controlled to clean the polished surface. For example, after the polishing means polishes the applied material or after the cleaning means cleans the surface, the applying means of the maintenance means 121 may be controlled to apply the paint, or the sticking means of the maintenance means 121 may be controlled to stick the protective material.

The surface shape after repair may be estimated by the control means 130 or may be estimated by an estimation means outside the device.

In an embodiment in which the surface shape after repair is estimated by the control means 130, the control means 130 receives data representing the cross-sectional shape measured in step S601. The control means 130 may receive data representing the cross-sectional shape from the measurement means of the device 100, or may receive data representing the cross-sectional shape from the outside of the device 100 via the communication means 140.

The control means 130 estimates the surface shape of the blade after repair based on the received cross-sectional shape. The process of estimating the surface shape after repair will be described below with reference to Fig. 7.

In an embodiment in which the surface shape after repair is estimated outside the device 100, the estimation means outside the device 100 may receive data representing the cross-sectional shape from the measurement means of the device 100 via the communication means 140, or may receive data representing the cross-sectional shape from the measurement means outside the device 100.

The estimation means estimates the surface shape of the blade after repair based on the received cross-sectional shape. The process of estimating the surface shape after repair will be described below with reference to Fig. 7.

The control means 130 may, for example, control the device 100 so that the device 100 controls the attitude of the device 100 according to the cross-sectional shape and the device 100 repairs the damaged portion of the blade according to the cross-sectional shape. That is, the device 100 repairs the damaged portion of the blade according to the cross-sectional shape while controlling the attitude according to the cross-sectional shape. This is preferable in that repair with high accuracy can be performed. For example, when the attitude of the device 100 changes during the repair of the blade, the device 100 works at a position that deviates from the surface to be originally worked, and it is not always possible to perform the repair with high accuracy. However, by repairing the damaged portion of the blade according to the cross-sectional shape while controlling the attitude according to the cross-sectional shape, it is possible to perform the repair while controlling the attitude with high accuracy according to the resolution of the cross-sectional shape, and it is possible to perform the repair with high accuracy (for example, accuracy of 1 mm or less). This may lead to perfection of the shape after repair and smoothness of connection between the damaged portion and the undamaged portion.

The control means 130 may control the device 100, for example, so that the device 100 determines, based on the cross-sectional shape, whether or not the blade is to be repaired. Accordingly, the device 100 compares, by its determination means, a cross-sectional shape in an undamaged state or an ideal state after repair, or a cross-sectional shape after repair estimated based on the measured cross-sectional shape with the measured cross-sectional shape, and can determine that the blade should be repaired when a difference or deviation therebetween is equal to or greater than a predetermined threshold.

The control means may control the device 100, for example, so that the device 100 specifies a damaged portion of the blade based on the cross-sectional shape. Thus, the device 100 can compare, by the specification means, the cross-sectional shape in an undamaged state or the ideal state after the repair, or the cross-sectional shape after the repair estimated based on the measured cross-sectional shape with the measured cross-sectional shape, and can specify a portion where a difference or deviation therebetween is equal to or greater than a predetermined threshold as a damaged portion.

Fig. 7 illustrates an example of a flow of a process (process 700) of estimating the surface shape after repair. The process 700 may be performed in the control means 130 of the device 100 or in an estimation means external to the device 100. Hereinafter, execution by the control means 130 will be described as an example.

In step S701, the control means 130 receives data representing the cross-sectional shape of the blade of the wind turbine.

In step S702, the control means 130 estimates a curve that smoothly connects to a cross-sectional shape of an undamaged portion in a cross section having a damaged portion based on the data received in step S701. The control means 130 can estimate the curve using polynomial approximation. Estimating the curve using the polynomial approximation includes, for example, at least one of (1) adjusting the order of polynomial approximation, (2) dividing the cross-sectional shape having the damaged portion into a plurality of regions and estimating a curve for each of the plurality of regions, (3) estimating a first curve, and estimating a second curve by ignoring a cross-sectional shape inside the first curve, or (4) estimating the curve based on a cross-sectional shape of a cross section having no damaged portion.

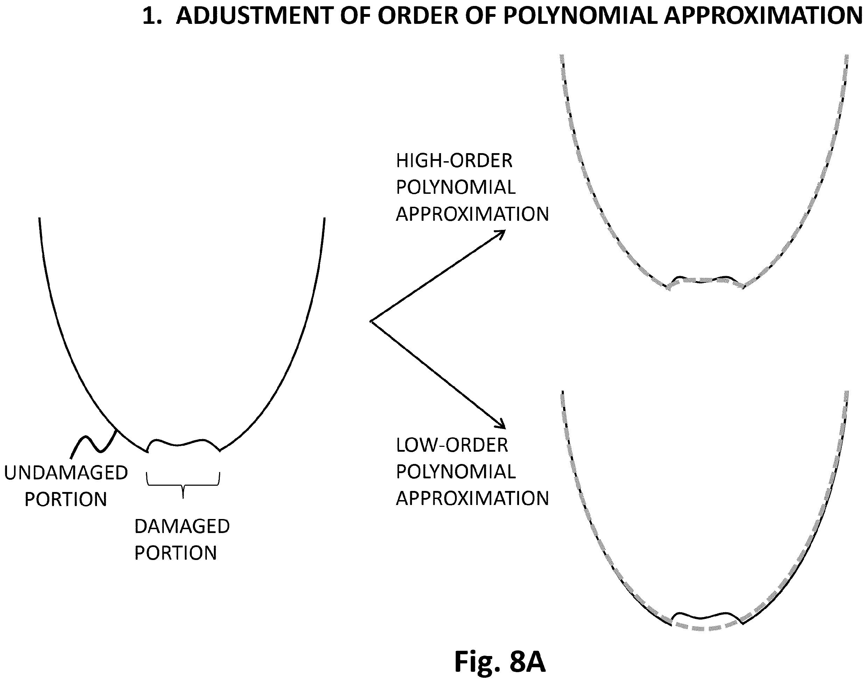

Fig. 8A is a diagram describing a concept of (1) adjusting the order of polynomial approximation. The left hand side view of Fig. 8A illustrates the measured cross-sectional shape of the cross-section with the damaged portion. The measured cross-sectional shape has an undamaged portion and a damaged portion. A curve that smoothly connects to the undamaged portion is estimated by polynomial approximation. In Fig. 8A, a gray broken line represents a curve estimated by polynomial approximation.

An example in which high-order polynomial approximation is used is illustrated in the upper right of Fig. 8A, and an example in which low-order polynomial approximation is used is illustrated in the lower right of Fig. 8A. As the order of the polynomial approximation is increased, the accuracy of fitting with respect to the cross-sectional shape is improved. However, if the order is too large, fitting is applied even to the damaged portion (overfitting), and thus, an inappropriate curve may be estimated. Therefore, the order of the polynomial approximation should be appropriately adjusted.

For example, since it is determined that an inappropriate curve does not satisfy the predetermined condition in subsequent step S703, the polynomial approximation is performed again by increasing or decreasing the order when the processing returns to step S702. This is preferable in that overfitting of the damaged portion can be avoided when the damaged portion is relatively large.

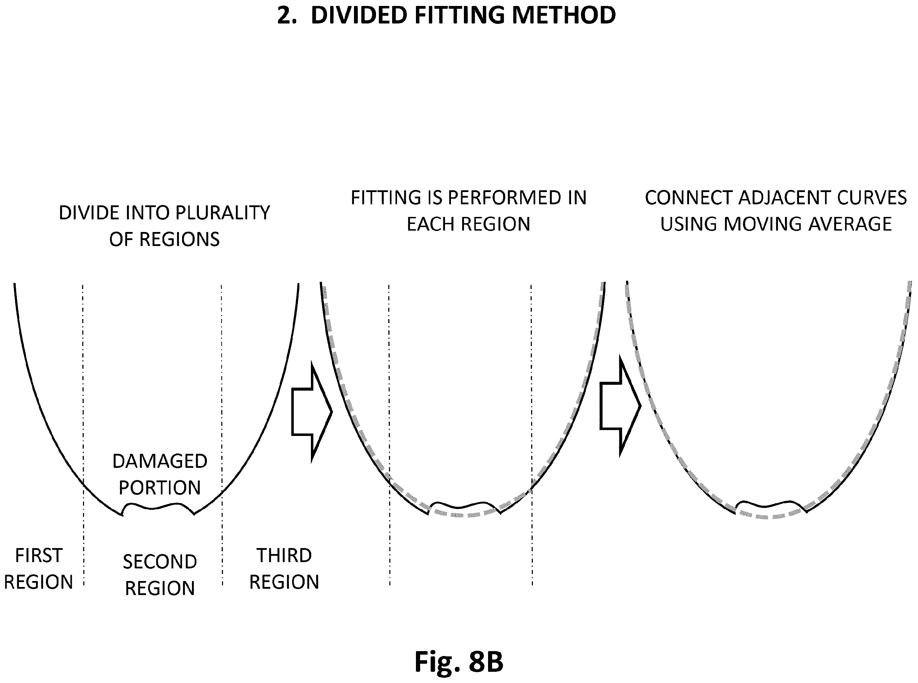

Fig. 8B is a diagram describing a concept of (2) dividing the cross-sectional shape having the damaged portion into a plurality of regions and estimating a curve for each of the plurality of regions.

First, the measured cross-sectional shape is divided into a region having a damaged portion and other regions. In the example illustrated in Fig. 8B, the region is divided into a first region on the left side of the region having the damaged portion, a second region having the damaged portion, and a third region on the right side of the region having the damaged portion. At this time, the second region is preferably a region including both the damaged portion and the undamaged portion instead of a region including only the damaged portion.

Next, polynomial approximation is performed on the first region and a curve corresponding to the first region is estimated, polynomial approximation is performed on the second region and a curve corresponding to the second region is estimated, and polynomial approximation is performed on the third region and a curve corresponding to the third region is estimated.

Next, for each estimated curve, adjacent curves are connected. At this time, by connecting by using the moving average, the boundaries of the respective regions overlap. For example, when connecting adjacent curves, each curve can be smoothly connected by performing processing of monotonically increasing the second-order difference between adjacent points of the point cloud data of each curve.

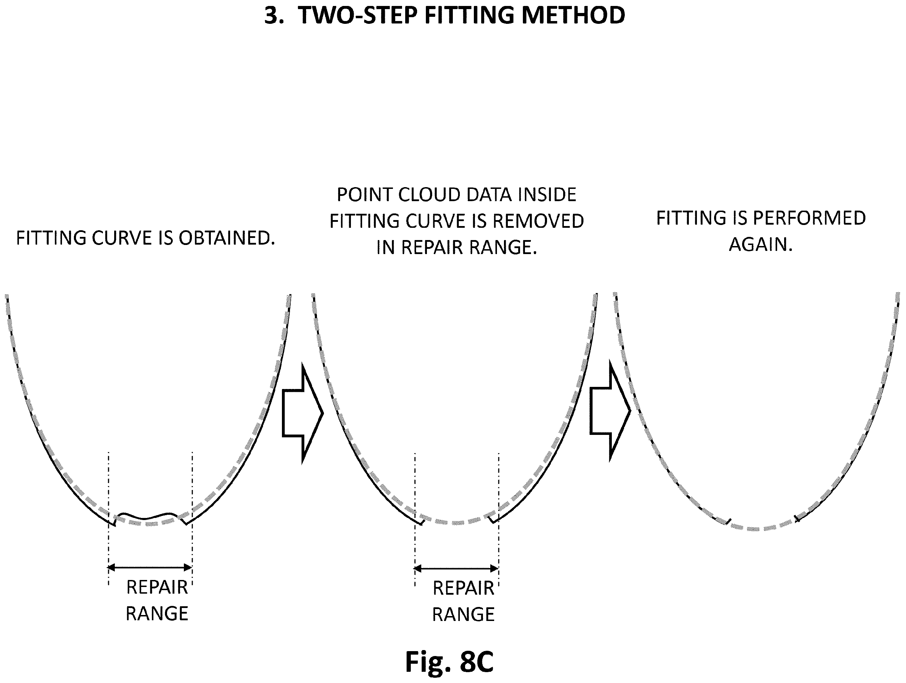

Fig. 8C is a diagram describing a concept of (3) estimating a first curve, and estimating a second curve by ignoring a cross-sectional shape inside the first curve.

First, a first curve is estimated from the measured cross-sectional shape using polynomial approximation. At this time, a range having a damaged portion in the cross-sectional shape is designated as a repair range.

Then, the first curve is compared with the measured cross-sectional shape, and the cross-sectional shape inside the first curve in the repair range is ignored. Here, the inside of the curve refers to a region corresponding to the blade itself, whereas the outside of the curve refers to a region that is not a blade, that is, a region corresponding to a space. For example, the data of the first curve is compared with the point cloud data of the measured cross-sectional shape, and the point cloud data inside the first curve in the repair range is removed.

Next, a curve is estimated using polynomial approximation for a cross-sectional shape other than the cross-sectional shape inside the first curve in the repair range. The curve estimated in this way is preferred in that overfitting to the damaged portion is avoided and the estimated curve is also prevented from being located inside the measured cross-sectional shape (that is, a surface shape that leads to cutting of the blade).

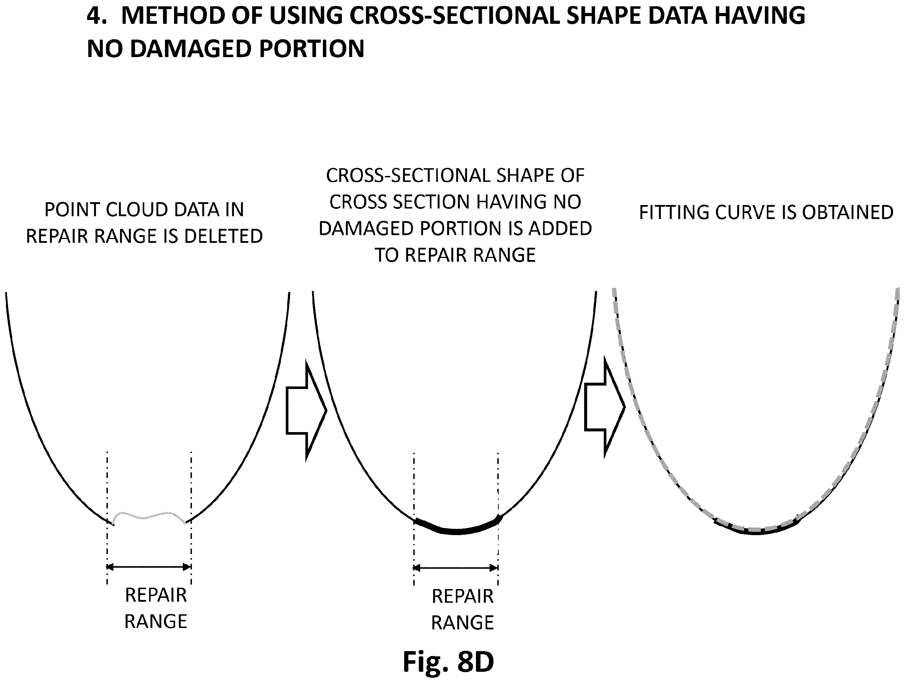

Fig. 8D is a diagram describing a concept of (4) estimating the curve based on a cross-sectional shape of a cross section having no damaged portion.

First, data within a repair range is removed from the measured cross-sectional shape. The repair range is a range having a damaged portion in the cross-sectional shape.

Next, the cross-sectional shape of the cross section having no damaged portion is added to the repair range. The cross section having no damaged portion may preferably be a cross section at a position near the cross section having the damaged repair-required portion.

Next, a curve is estimated using polynomial approximation with respect to the cross-sectional shape in which the cross-sectional shape having no damaged portion is added to the repair range. Some inconsistencies in the boundary with the repair range will be absorbed by polynomial approximation. The curve estimated in this way is also preferable in that overfitting to the damaged portion is avoided.

In addition to (1) to (4) or instead of (1) to (4), the estimation of the curve using the polynomial approximation may be configured to perform at least one of (5) correcting the curve based on user input or (6) estimating the curve based on design data of blade of the wind turbine.

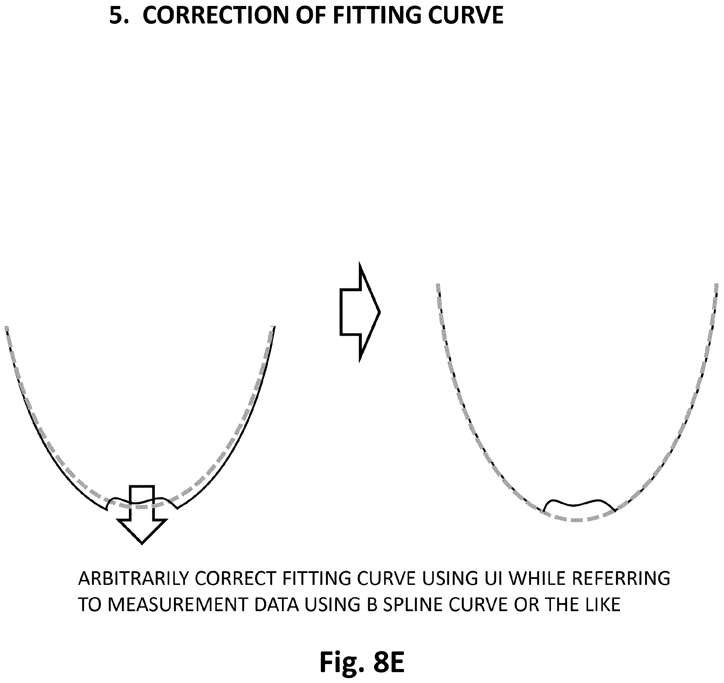

Fig. 8E is a diagram describing a concept of (5) correcting a curve based on a user input.

In (1) to (4) described above, the fine shape may not be as intended by the user. At this time, a user interface for correcting the estimated curve is presented to the user, and the user can obtain the intended curve by inputting to the user interface.

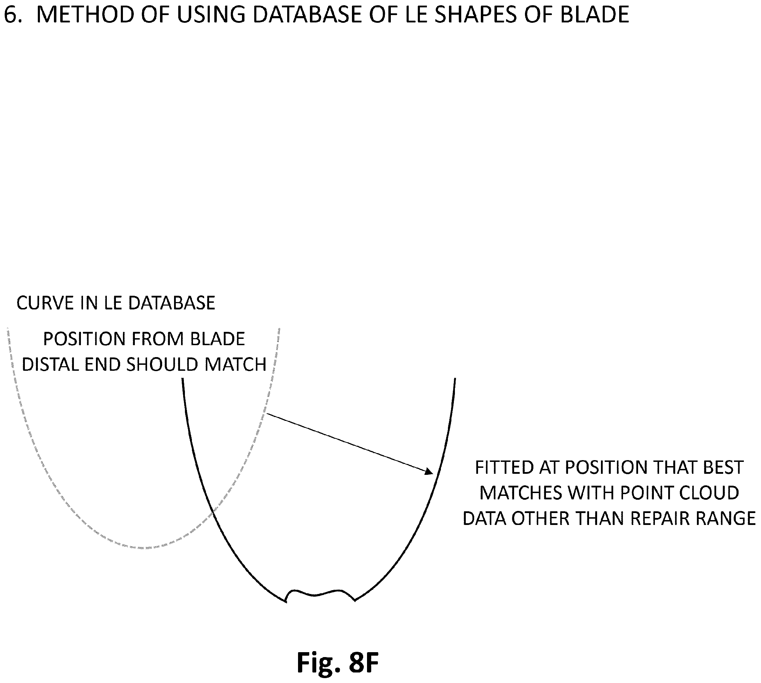

Fig. 8F is a diagram describing the concept of (6) estimating a curve based on design data of blade of a wind turbine.

For example, design data of the blade shape of each manufacturer of the blade of the wind turbine is stored in the database. Then, the curve can be estimated based on the design data of the blade to be repaired.

For example, as in (4), data within the repair range is removed from the measured cross-sectional shape, design data is added to the repair range, and then a curve can be estimated using polynomial approximation.

In order to improve the accuracy of the estimated curve, for example, for one damaged portion extending in the direction in which the leading edge extends, a plurality of cross sections having the damaged portion can be acquired, and the surface shape after repair can be estimated based on the cross-sectional shape of the cross section having the damaged portion with the least damage.

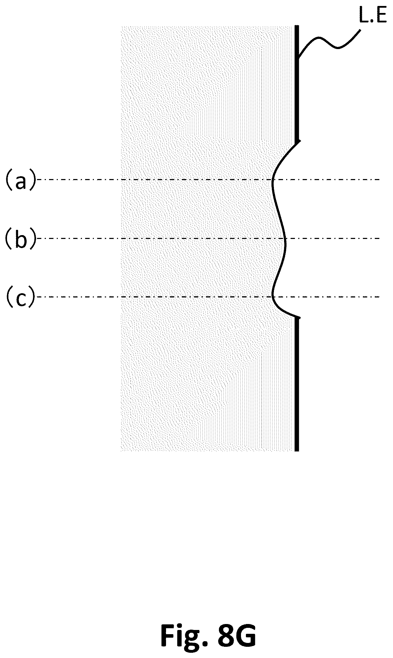

For example, as illustrated in Fig. 8G, the cross-sectional shape of the cross section of each of the plurality of points (a) to (c) is measured along the leading edge L.E, and the surface shape after repair can be estimated based on the cross-sectional shape of the cross section with the least damage. In this example, since the cross-sectional shape of the cross section of (b) is considered to have the least damage, the surface shape after repair is estimated based on the cross-sectional shape of the cross section of (b).

The estimation of the surface shape after repair can also be performed by pattern matching instead of polynomial approximation. For example, a curve of shape data of a blade repaired in the past and/or a design data curve of a blade acquired from the manufacturer are compared with the measured cross-sectional shape, and the curve most similar to the undamaged portion can be the surface shape after the repair.

Referring again to Fig. 7, in step S703, the control means 130 determines whether or not the curve estimated in step S702 satisfies a predetermined condition. In a case where it is determined that the predetermined condition is not satisfied, it is determined that the estimated curve is inappropriate, the process returns to step S702, and the curve is estimated again. At this time, for example, the curve is estimated by changing the condition, or the curve is estimated by a method different from the previously performed method. Steps S702 to S703 are repeated until it is determined in step S703 that the predetermined condition is satisfied.

The predetermined condition includes that a matching rate between the estimated curve and a curve representing a cross-sectional shape of an undamaged portion in the cross-sectional shape having the damaged portion exceeds a predetermined threshold, and that a rate at which the estimated curve is located inside the measured cross-sectional shape does not exceed a predetermined threshold. The predetermined threshold can be appropriately set according to the accuracy of repair. The rate at which the estimated curve is located inside the measured cross-sectional shape is an index for preventing the estimated curve from becoming a curve that scrapes the blade inward for repair. This is because, in repairing the blade, scraping the blade inward should be avoided in order to restore the worn portion.

For example, as illustrated in Fig. 8G, the cross-sectional shape of each of the plurality of locations may be measured, and it may be determined whether or not the estimated curve satisfies the predetermined condition for the cross-sectional shape of each of the plurality of locations.

When it is determined that the predetermined condition is satisfied, the process proceeds to step S704, and the process 700 ends. The estimated curve is regarded as the surface shape after the repair, and the repair is performed so as to achieve the estimated curve.

In the above-described example, the surface shape after repair is estimated based on the cross-sectional shape for a certain cross section in the direction in which the leading edge L.E extends. However, for example, the surface shape after repair can be estimated in consideration of the shape in the direction in which the leading edge L.E extends. For example, the surface shape after repair can be estimated so that the damaged portion and the undamaged portion are smoothly connected in the direction in which the leading edge L.E extends.

The present invention is not limited to the above-described embodiments. It is understood that the invention is to be interpreted only by the claims. It is understood from the description of the specific preferred embodiments of the present invention that a person skilled in the art can implement equivalent ranges based on the description of the present invention and the common general knowledge.

### [Industrial Applicability]

The present invention is useful as a method for controlling a device that moves on a blade of a wind turbine.

### Reference Signs List

10: Wind turbine
11, 12, 13: Blade
14: Nacelle
15: Hub
20: Rope
100: Device

## Claims

1. A method for controlling a device that moves on a blade of a wind turbine, the method comprising:
measuring a cross-sectional shape of the blade of the wind turbine; and
controlling the device so that the device performs behavior according to the cross-sectional shape.

2. The method according to claim 1, wherein the controlling the device comprises:
controlling the device so that the device repairs a damaged portion of the blade of the wind turbine according to the cross-sectional shape.

3. The method according to claim 2, wherein performing the repair of the damaged portion of the blade of the wind turbine according to the cross-sectional shape includes:
estimating a surface shape after repair of the blade of the wind turbine based on the cross-sectional shape; and
performing repair of the damaged portion so as to achieve the estimated surface shape.

4. The method according to claim 2, wherein the controlling the device further comprises:
determining whether or not to repair the blade of the wind turbine based on the cross-sectional shape, and
the controlling the device so as to repair the damaged portion is performed when it is determined that the blade of the wind turbine should be repaired.

5. The method according to claim 2, wherein the controlling the device further comprises:
specifying the damaged portion based on the cross-sectional shape.

6. The method according to claim 2, further comprising:
measuring the cross-sectional shape of the blade of the wind turbine while repairing the damaged portion; and
storing a result of measuring the cross-sectional shape of the blade of the wind turbine.

7. The method according to claim 6, further comprising adjusting repair of the damaged portion based on the stored result.

8. The method according to any one of claims 1 to 7, wherein the controlling the device further comprises:
controlling the device so that the device controls an attitude of the device according to the cross-sectional shape.

9. The method according to claim 8, wherein the controlling the attitude of the device according to the cross-sectional shape includes:
determining a peak in each cross-sectional shape based on a cross-sectional shape at a first position and a cross-sectional shape at a second position in a direction along the blade of the wind turbine; and
controlling the attitude of the device so that a line connecting a peak of the cross-sectional shape at the first position and a peak of the cross-sectional shape at the second position is parallel to a center line of the device.

10. The method according to claim 8, wherein the controlling the attitude of the device according to the cross-sectional shape comprises controlling the attitude of the device when the device lands on the blade of the wind turbine.

11. The method according to claim 3, wherein the estimating the surface shape after the repair of the blade of the wind turbine based on the cross-sectional shape comprises:
estimating, using polynomial approximation, a curve that smoothly connects with a cross-sectional shape of an undamaged portion in a cross section having the damaged portion.

12. The method according to claim 11, wherein the estimating, using polynomial approximation, a curve that smoothly connects with a cross-sectional shape of an undamaged portion in a cross-sectional shape having the damaged portion comprises at least one of:
adjusting an order of the polynomial approximation;
dividing the cross-sectional shape having the damaged portion into a plurality of regions and estimating a curve for each of the plurality of regions;
estimating a first curve, and estimating a second curve by ignoring a cross-sectional shape inside the first curve; or
estimating a curve based on a cross-sectional shape of a cross section having no damaged portion.

13. The method according to claim 12, wherein the estimating, using polynomial approximation, a curve that smoothly connects with a cross-sectional shape of an undamaged portion in a cross-sectional shape having the damaged portion further comprises at least one of:
modifying a curve based on a user input; or
estimating a curve based on design data of the blade of the wind turbine.

14. The method according to any one of claims 11 to 13, wherein the estimating the surface shape after the repair of the blade of the wind turbine based on the cross-sectional shape comprises:
determining whether or not the estimated curve satisfies a predetermined condition.

15. The method according to claim 14, wherein the predetermined condition includes that
a matching rate between the estimated curve and a curve representing a cross-sectional shape of an undamaged portion in the cross-sectional shape having the damaged portion exceeds a predetermined threshold, and
a rate at which the estimated curve is located inside the measured cross-sectional shape does not exceed a predetermined threshold.

16. The method according to claim 1, wherein the cross-sectional shape includes a cross-sectional shape perpendicular to a direction in which a leading edge of the blade of the wind turbine extends and a cross-sectional shape parallel to a direction in which the leading edge of the blade of the wind turbine extends.

17. A device comprising:
a movement means for moving along a blade of a wind turbine;
a measurement means that measures a cross-sectional shape of the blade of the wind turbine; and
a control means that controls the device so that the device performs behavior according to the cross-sectional shape.

18. A control program for a device that moves on a blade of a wind turbine, the program being executed by a processor comprised in the device, the program causing the processor to perform a processing comprising:
receiving data representing a cross-sectional shape of the blade of the wind turbine; and
controlling the device so that the device performs behavior according to the cross-sectional shape.

19. A method for controlling a device that moves on a blade of a wind turbine, the method comprising:
measuring a cross-sectional shape of the blade of the wind turbine;
controlling the device so that the device controls an attitude of the device according to the cross-sectional shape; and
controlling the device so that the device repairs a damaged portion of the blade of the wind turbine according to the cross-sectional shape.

20. A method comprising:
receiving data representing a cross-sectional shape of a blade of a wind turbine; and
determining whether or not to repair the blade of the wind turbine based on the cross-sectional shape.
